(19) Europäisches Patentamt
European Patent Office
Office européen des brevets

(11) **EP 4 572 381 A1**

(12) **EUROPEAN PATENT APPLICATION**
published in accordance with Art. 153(4) EPC

(43) Date of publication:
**18.06.2025 Bulletin 2025/25**

(21) Application number: **23864441.3**

(22) Date of filing: **29.06.2023**

(51) International Patent Classification (IPC):
*H04W 24/08* (2009.01)

(52) Cooperative Patent Classification (CPC):
**H04B 7/06; H04W 24/08**

(86) International application number:
**PCT/CN2023/104252**

(87) International publication number:
**WO 2024/055702 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.09.2022 CN 202211131509**

(71) Applicant: **Huawei Technologies Co., Ltd.
Shenzhen, Guangdong 518129 (CN)**

(72) Inventors:
• **DU, Rui
Shenzhen, Guangdong 518129 (CN)**

• **SHI, Shuyu
Nanjing, Jiangsu 210093 (CN)**
• **WANG, Wei
Nanjing, Jiangsu 210093 (CN)**
• **NAREN, Gerile
Shenzhen, Guangdong 518129 (CN)**
• **HU, Mengshi
Shenzhen, Guangdong 518129 (CN)**
• **HAN, Xiao
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **CHANNEL MEASUREMENT METHOD AND RELATED DEVICE**

(57) This application is applied to the field of wireless communication technologies, for example, is applied to a wireless local area network system of 802.11 series protocols, for example, a system supporting a next-generation Wi-Fi protocol of IEEE 802.11ax such as 802.11be, Wi-Fi 7, or EHT, and a next generation of 802.11be such as Wi-Fi 8, UHR, or UHRT, a sensing (sensing) system, or the like. This application provides a channel measurement method and a related apparatus. The method includes: obtaining a weight vector W; and sending channel state information processed based on the weight vector W, where signal-to-noise ratios or energy of the processed channel state information at P first distances is enhanced, and/or signal-to-noise ratios or energy of the processed channel state information at Q second distances is suppressed, where both P and Q are positive integers. The channel state information in embodiments of this application takes into account a requirement of enhancement and/or suppression at a distance. This helps improve sensing performance.

FIG. 7

**Description**

This application claims priority to Chinese Patent Application No. 202211131509.0, filed with the China National Intellectual Property Administration on September 16, 2022 and entitled "CHANNEL MEASUREMENT METHOD AND RELATED APPARATUS", which is incorporated herein by reference in its entirety.

**TECHNICAL FIELD**

This application relates to the field of wireless communication technologies, and in particular, to a channel measurement method and a related apparatus.

**BACKGROUND**

With development of wireless communication technologies, various wireless communication devices have been widely deployed in people's daily life and work. For example, these wireless communication devices may include a mobile phone, a computer, a wireless router, a smart home device, a wireless sensor, and the like. In a common home environment, there are usually more than ten or even hundreds of wireless communication devices. In a process of performing communication in a wireless manner, these wireless communication devices can sense interference caused by a moving object or a human body to a radio wave. A radio sensing technology can measure such interference to sense a surrounding environment.

For example, in a radio sensing system, a radio signal received by a signal receive end from a signal transmit end may include a direct signal and a reflected signal reflected back by a detection target in a surrounding environment. In this case, the signal receive end can detect that a channel of a radio link changes. In a communication protocol, a channel is quantized as channel state information (channel state information, CSI). Correspondingly, the channel change may be represented as a change of an amplitude and a phase of the CSI. If sensing is processed at the signal transmit end, the signal receive end needs to send the CSI to the signal transmit end, and the signal transmit end processes the CSI to obtain sensing information, or the signal receive end may process the CSI to obtain sensing information.

However, radio bandwidth resources are limited, or processing capabilities of the signal receive end and the signal transmit end are limited. Therefore, how to improve sensing performance becomes an urgent problem to be resolved.

**SUMMARY**

This application provides a channel measurement method and a related apparatus, so that sensing performance can be improved.

According to a first aspect, this application provides a channel measurement method. The method may be applied to a first apparatus. The first apparatus may be an access point or a station in a wireless local area network (wireless local area network, WLAN), or may be a network device or a terminal device in a cellular network, or may be a chip in the device, or the like. This is not limited in this application. The method is described by using an example in which the first apparatus is a signal receive end. The method includes: The first apparatus obtains a weight vector W, and sends channel state information processed based on the weight vector W. Signal-to-noise ratios or energy of the processed channel state information at P first distances is enhanced, and/or signal-to-noise ratios or energy of the processed channel state information at Q second distances is suppressed, where P and Q are positive integers.

It can be seen that, the channel state information processed based on the weight vector W takes into account a requirement of enhancement and/or suppression at a distance, so that the processed channel state information is used to implement a sensing-related application. This can more effectively improve sensing performance than channel state information directly obtained through channel estimation. In addition, in comparison with a case in which the channel state information is directly obtained through channel estimation, a case in which the signal-to-noise ratios or the energy of the processed channel state information at the P first distances is enhanced and/or the signal-to-noise ratios or the energy of the processed channel state information at the Q second distances is suppressed can further greatly reduce a channel measurement data amount, reduce a bandwidth required for transmitting a channel measurement result, and lower a capability required for processing the channel measurement result.

In an optional implementation, before obtaining the weight vector W, the first apparatus may: receive a request frame, where the request frame is used to request to set up a channel measurement session based on the weight vector W; and send a response frame, where the response frame is used to respond to the request frame.

Optionally, the request frame may include a measurement type field, indicating that the request frame is used to request to set up the channel measurement session based on the weight vector W. Optionally, the response frame may also include the measurement type field, so that both parties agree to set up the channel measurement session based on the weight vector W.

Optionally, the request frame may be a sensing session setup request frame in a sensing session setup phase; and correspondingly, the response frame may be a sensing session setup response frame.

In an optional implementation, that the first apparatus obtains a weight vector W includes: The first apparatus receives a first frame. The first frame includes a first field. The first field indicates the weight vector W; or indicates the P first distances at which the signal-to-noise ratios or the energy needs to be enhanced, and/or the Q second distances at which the signal-to-noise ratios or the energy needs to be suppressed. If the first field indicates the P first distances and/or the Q second distances, the method further includes: The first apparatus determines the weight vector W based on the P first distances and/or the Q second distances. It can be seen that, in this implementation, the first apparatus may obtain the weight vector W based on the first frame.

In another optional implementation, the first apparatus may alternatively obtain the weight vector locally, for example, from a predefined weight vector set.

In an optional implementation, the first frame received by the first apparatus may further include a second field. If the second field is a first value, the first field indicates the weight vector W. For example, the first field includes the weight vector W or an index of the weight vector W. If the second field is a second value, the first field indicates the P first distances at which the signal-to-noise ratios or the energy needs to be enhanced, and/or the Q second distances at which the signal-to-noise ratios or the energy needs to be suppressed. For example, the first field includes distance information of the P first distances and/or the Q second distances.

In an optional implementation, the first frame is a sensing session setup request (sensing session setup request) frame, in a sensing session setup (sensing session setup) phase, used to request to set up a sensing session based on the weight vector W. Correspondingly, after receiving the sensing session setup request frame, the first apparatus may further send a sensing session setup response (sensing session setup response) frame, used to respond to the sensing session setup request frame. Optionally, in this implementation, the sensing session setup request frame may include the first field, or may include the first field and the second field. Optionally, the sensing session setup response frame may include a third field, indicating to agree to set up the sensing session based on the weight vector W. Optionally, the sensing session setup response frame may include the first field, to match with the first apparatus and set up the sensing session based on the weight vector.

In another optional implementation, the first frame is a sensing measurement setup request (sensing measurement setup request) frame, in a sensing measurement setup (sensing measurement setup) phase, used to request to enable sensing measurement based on the weight vector W. Correspondingly, after receiving the sensing measurement setup request frame, the first apparatus may further send a sensing measurement setup response (sensing measurement setup response) frame, used to respond to the sensing measurement setup request frame. Optionally, in this implementation, the sensing measurement setup request frame may include the first field, or may include the first field and the second field. Optionally, the sensing measurement setup response frame may include a third field, indicating to agree to enable sensing measurement based on the weight vector W. Optionally, the sensing measurement setup response frame may include the first field, to match the weight vector or the distance information with the first apparatus.

In still another optional implementation, in a trigger-based (trigger-based, TB) sensing measurement procedure, the first frame may be a sensing polling trigger (sensing polling trigger) frame or a polling (polling) frame, in a sensing measurement instance (sensing measurement instance) phase, used to query whether to participate in sensing measurement based on the weight vector W. Optionally, the sensing polling trigger frame may include the first field, or include the first field and the second field. Correspondingly, after receiving the sensing polling trigger frame or the polling frame, the first apparatus may further send a CTS-to-self (CTS-to-Self) frame, used to acknowledge participation in sensing measurement based on the weight vector W. Optionally, a user information field in the sensing polling trigger frame or the polling frame may indicate a signal receive end that needs to be queried.

In still another optional implementation, in a trigger-based (trigger-based, TB) sensing measurement procedure or a non-trigger-based (non-trigger-based, Non-TB) sensing measurement procedure, the first frame may be a null data packet announcement (null data packet announcement, NDPA) frame. The NDPA frame is used to notify the first apparatus that a next frame of the NDPA frame is a sensing measurement frame and of a related parameter of a subsequently sent NDP frame. Optionally, in this implementation, the NDPA frame may include the first field, or may include the first field and the second field.

In still another optional implementation, the first frame may be a sensing measurement frame or a sensing sounding frame, for example, a sounding (sounding) frame or a null data packet (NDP) frame. Optionally, the sensing measurement frame or the sensing sounding frame may include the first field, or may include the first field and the second field.

In an optional implementation, that the first apparatus sends channel state information processed based on the weight vector W includes: The first apparatus sends a feedback frame. The feedback frame includes the channel state information processed based on the weight vector W, and a value of a feedback type field in the feedback frame indicates that the feedback frame includes the channel state information processed based on the weight vector W.

In an optional implementation, before sending the feedback frame, the first apparatus may further receive a trigger frame. A value of a feedback type field in the trigger frame is used to trigger the first apparatus to send the channel state information processed based on the weight vector W. It can be seen that, in this implementation, the first apparatus may select, based on the value of the feedback type field in the trigger frame, to feed back channel state information of a corresponding type.

Optionally, before sending the feedback frame, the first apparatus may not receive a trigger frame, and notifies, based on the value of the feedback type field in the feedback frame, a type of channel state information fed back by a receive end.

In an optional implementation, that the first apparatus determines the weight vector W based on the P first distances and/or the Q second distances may include: The first apparatus selects the corresponding weight vector W from a predefined weight vector set based on the P first distances and/or the Q second distances.

In another optional implementation, that the first apparatus determines the weight vector W based on the P first distances and/or the Q second distances includes: determining a steering matrix V based on the P first distances and/or the Q second distances, where the steering matrix V includes a steering row vector corresponding to each of L distances, the steering row vector corresponding to each distance is obtained based on a propagation delay corresponding to the distance, and the L distances include the P first distances and/or the Q second distances; and determining the weight vector W based on the steering matrix V.

Optionally, the weight vector W and the steering matrix V satisfy the following relationship:

$$W \times V + S = U,$$

where
S represents noise on a path of the L distances, and is a row vector whose quantity of columns is L; and U is a row vector including L elements corresponding to the L distances, all elements corresponding to the first distance are 1, and all elements corresponding to the second distance are 0.

According to a second aspect, this application provides a channel measurement method. The method may be applied to a second apparatus. The second apparatus may be an access point or a station in a wireless local area network (wireless local area network, WLAN), or may be a network device, a terminal device, or the like in a cellular network. This is not limited in this application. The method is described by using an example in which the second apparatus is a signal transmit end. The method includes: The second apparatus receives channel state information processed based on a weight vector W. Signal-to-noise ratios or energy, at P first distances, of the channel state information processed based on the weight vector W is enhanced, and/or signal-to-noise ratios or energy, at Q second distances, of the channel state information processed based on the weight vector W is suppressed, where P and Q are positive integers.

It can be seen that, the channel measurement information obtained by using the channel measurement method takes into account a requirement of enhancement and/or suppression at a distance, so that the channel measurement information is used to implement a sensing-related application. This can more effectively improve sensing performance than channel state information directly obtained through channel estimation. In addition, in comparison with a case in which channel state information is directly obtained through channel estimation, a case in which the signal-to-noise ratios or the energy, at the P first distances, of the channel measurement information obtained by using the channel measurement method is enhanced and/or the signal-to-noise ratios or the energy, at the Q second distances, of the channel measurement information obtained by using the channel measurement method is suppressed can further greatly reduce a channel measurement data amount, reduce a bandwidth required for transmitting the channel measurement information, and lower a capability required for processing the channel measurement information.

In an optional implementation, before receiving the channel state information, the second apparatus: further sends a request frame, where the request frame is used to request to set up a channel measurement session based on the weight vector W; and correspondingly, may receive a response frame, where the response frame is used to respond to the request frame. Optionally, the request frame may be a sensing session setup request frame in a sensing session setup phase; and correspondingly, the response frame may be a sensing session setup response frame. Optionally, the request frame may include a measurement type field, indicating that the request frame is used to request to set up the channel measurement session based on the weight vector W. Optionally, the response frame may also include the measurement type field, so that both parties agree to set up the channel measurement session based on the weight vector W.

In an optional implementation, the second apparatus may further send a first frame. The first frame includes a first field. The first field indicates the weight vector W. Alternatively, the first field indicates the P first distances at which the signal-to-noise ratios or the energy needs to be enhanced, and/or the Q second distances at which the signal-to-noise ratios or the energy needs to be suppressed, and the P first distances and/or the Q second distances are used to determine the weight vector W.

In an optional implementation, the first frame further includes a second field. If the second field is a first value, the first field indicates the weight vector W. For example, the first field includes the weight vector W or an index of the weight vector W. If the second field is a second value, the first field indicates the P first distances at which the signal-to-noise ratios or the energy needs to be enhanced, and/or the Q second distances at which the signal-to-noise ratios or the energy needs to be suppressed. For example, the first field includes distance information of the P first distances and/or the Q second distances.

In an optional implementation, the first frame is a sensing measurement setup request frame in a sensing measurement setup phase, used to request to enable sensing measurement based on the weight vector W. Correspondingly, after sending the sensing measurement setup request frame, the second apparatus may further receive a sensing measurement setup response frame, used to respond to the sensing measurement setup request frame. Optionally, in this implementation, the sensing measurement setup request frame may include the first field, or may include the first field and the second field. Optionally, the sensing measurement setup response frame may include a third field, indicating to agree to enable sensing measurement based on the weight vector W. Optionally, the sensing measurement setup response frame may include the first field, to match the weight vector or the distance information with the first apparatus.

In another optional implementation, in a TB sensing measurement procedure, the first frame may be a sensing polling trigger frame, in a sensing measurement instance phase, used to query whether to participate in sensing measurement based on the weight vector W. It can be seen that the sensing polling trigger frame may include the first field, or include the first field and the second field. Correspondingly, after sending the sensing polling trigger frame, the second apparatus may further receive a CTS-to-Self frame, used to acknowledge participation in sensing measurement based on the weight vector W. Optionally, a user information field in the sensing polling trigger frame may indicate a signal receive end that needs to be queried.

In still another optional implementation, in a TB or non-TB sensing measurement procedure, the first frame may be an NDPA frame. The NDPA frame is used to notify the first apparatus that a next frame of the NDPA frame is a sensing measurement frame and of a related parameter of the sensing measurement frame. It can be seen that, in this implementation, the NDPA frame may include the first field, or may include the first field and the second field.

In still another optional implementation, the first frame may be a sensing measurement frame, for example, a sounding frame or an NDP frame. Optionally, the sensing measurement frame may include the first field, or may include the first field and the second field.

In an optional implementation, that the second apparatus receives channel state information includes: receiving a feedback frame. The feedback frame includes the channel state information processed based on the weight vector W, and a value of a feedback type field in the feedback frame indicates that the feedback frame includes the channel state information processed based on the weight vector W.

In an optional implementation, before the second apparatus receives the channel state information, the method further includes: The second apparatus sends a trigger frame. A value of a feedback type field in the trigger frame is used to trigger sending of the channel state information processed based on the weight vector W. It can be seen that, in this implementation, the second apparatus may notify, based on the value of the feedback type field in the trigger frame, the first apparatus to feed back channel state information of a corresponding type.

Optionally, before receiving the feedback frame, the second apparatus may not send a trigger frame, and learns, based on the value of the feedback type field in the feedback frame, a type of the channel state information fed back by the first apparatus.

In an optional implementation, that the P first distances and/or the Q second distances are used to determine the weight vector W is specifically as follows: The weight vector W is selected from a predefined weight vector set based on the P first distances and/or the Q second distances.

In another optional implementation, that the P first distances and/or the Q second distances are used to determine the weight vector W is specifically as follows: The weight vector W is determined based on a steering matrix V, where the steering matrix V is determined based on the P first distances and/or the Q second distances, the steering matrix V includes a steering row vector corresponding to each of L distances, the steering row vector corresponding to each distance is obtained based on a propagation delay corresponding to the distance, and the L distances include the P first distances and/or the Q second distances.

Optionally, the weight vector W and the steering matrix V satisfy the following relationship:

$$W \times V + S = U,$$

where

S represents noise on a path of the L distances, and is a row vector whose quantity of columns is L; and U is a row vector including L elements corresponding to the L distances, all elements corresponding to the first distance are 1, and all elements corresponding to the second distance are 0.

In this aspect, for optional implementations and beneficial effects thereof, refer to the descriptions in the first aspect. Details are not described herein again.

According to a third aspect, this application provides a communication apparatus. The communication apparatus may perform the channel measurement method in the first aspect. The communication apparatus may include: a processing unit, configured to obtain a weight vector W; and a communication unit, configured to send channel state information processed based on the weight vector W. Signal-to-noise ratios or energy, at P first distances, of the channel state information processed based on the weight vector W is enhanced, and/or signal-to-noise ratios or energy, at Q second distances, of the channel state information processed based on the weight vector W is suppressed, where P and Q are positive integers.

In an optional implementation, before the processing unit obtains the weight vector W, the communication unit is further configured to receive a request frame, where the request frame is used to request to set up a channel measurement session based on the weight vector W; and the communication unit is further configured to send a response frame, where the response frame is used to respond to the request frame.

In an optional implementation, the request frame includes a measurement type field. The measurement type field indicates that the request frame is used to request to set up the channel measurement session based on the weight vector W.

In an optional implementation, the communication unit is further configured to receive a first frame. The first frame includes a first field. The first field indicates the weight vector W; or indicates the P first distances at which the signal-to-noise ratios or the energy needs to be enhanced, and/or the Q second distances at which the signal-to-noise ratios or the energy needs to be suppressed. If the first field indicates the P first distances and/or the Q second distances, the processing unit is further configured to determine the weight vector W based on the P first distances and/or the Q second distances. If the first field indicates the weight vector W, the processing unit is specifically configured to obtain the weight vector W from the first field.

In an optional implementation, the first frame further includes a second field. If the second field is a first value, the first field indicates the weight vector W. If the second field is a second value, the first field indicates the P first distances at which the signal-to-noise ratios or the energy needs to be enhanced, and/or the Q second distances at which the signal-to-noise ratios or the energy needs to be suppressed.

In an optional implementation, the first frame is a sensing session setup request frame in a sensing session setup phase, a sensing measurement setup request frame in a sensing measurement setup phase, or a sensing polling trigger frame, a polling frame, a null data packet announcement frame, a null data packet frame, or a sounding frame in a sensing measurement phase.

In an optional implementation, that a communication unit is configured to send channel state information processed based on the weight vector W is specifically as follows: sending a feedback frame. The feedback frame includes the channel state information processed based on the weight vector W, and a value of a feedback type field in the feedback frame indicates that the feedback frame includes the channel state information processed based on the weight vector W.

In an optional implementation, before being configured to send the channel state information processed based on the weight vector W, the communication unit is further configured to receive a trigger frame. A value of a feedback type field in the trigger frame is used to trigger sending of the channel state information processed based on the weight vector W.

In an optional implementation, that the processing unit determines the weight vector W based on the P first distances and/or the Q second distances is specifically as follows: determining a steering matrix V based on the P first distances and/or the Q second distances, where the steering matrix V includes a steering row vector corresponding to each of L distances, the steering row vector corresponding to each distance is obtained based on a propagation delay corresponding to the distance, and the L distances include the P first distances and/or the Q second distances; and determining the weight vector W based on the steering matrix V.

In an optional implementation, the weight vector W and the steering matrix V satisfy the following relationship:

$$W \times V + S = U,$$

where
S represents noise on a path of the L distances, and is a row vector whose quantity of columns is L; and U is a row vector including L elements corresponding to the L distances, all elements corresponding to the first distance are 1, and all elements corresponding to the second distance are 0.

In this aspect, for optional implementations and beneficial effects thereof, refer to the descriptions in the first aspect. Details are not described herein again.

According to a fourth aspect, this application provides another communication apparatus. The communication apparatus may perform a related operation of the second apparatus in the second aspect. The communication apparatus includes a communication unit, configured to receive channel state information processed based on a weight vector W. Signal-to-noise ratios or energy, at P first distances, of the channel state information processed based on the weight vector W is enhanced, and/or signal-to-noise ratios or energy, at Q second distances, of the channel state information processed based on the weight vector W is suppressed, where P and Q are positive integers.

In an optional implementation, the communication unit is further configured to send a request frame, where the request frame is used to request to set up a channel measurement session based on the weight vector W; and the communication unit is further configured to receive a response frame, where the response frame is used to respond to the request frame.

In an optional implementation, the request frame includes a measurement type field. The measurement type field indicates that the request frame is used to request to set up the channel measurement session based on the weight vector W.

In an optional implementation, the communication unit is further configured to send a first frame. The first frame includes a first field. The first field indicates the weight vector W. Alternatively, the first field indicates the P first distances at which the signal-to-noise ratios or the energy needs to be enhanced, and/or the Q second distances at which the signal-to-noise ratios or the energy needs to be suppressed, and the P first distances and/or the Q second distances are used to determine the weight vector W.

In an optional implementation, the first frame further includes a second field. If the second field is a first value, the first field indicates the weight vector W. If the second field is a second value, the first field indicates the P first distances at which the signal-to-noise ratios or the energy needs to be enhanced, and/or the Q second distances at which the signal-to-noise ratios or the energy needs to be suppressed.

In an optional implementation, the first frame is a sensing session setup request frame in a sensing session setup phase, a sensing measurement setup request frame in a sensing measurement setup phase, or a sensing polling trigger frame, a polling frame, a null data packet announcement frame, a null data packet frame, or a sounding frame in a sensing measurement phase.

In an optional implementation, that a communication unit receives channel state information is specifically as follows: receiving a feedback frame. The feedback frame includes the channel state information processed based on the weight vector W, and a value of a feedback type field in the feedback frame indicates that the feedback frame includes the channel state information processed based on the weight vector W.

In an optional implementation, before receiving the channel state information, the communication unit is further configured to send a trigger frame. A value of a feedback type field in the trigger frame is used to trigger sending of the channel state information processed based on the weight vector W.

In an optional implementation, that the P first distances and/or the Q second distances are used to determine the weight vector W is specifically as follows: The weight vector W is determined based on a steering matrix V, where the steering matrix V is determined based on the P first distances and/or the Q second distances, the steering matrix V includes a steering row vector corresponding to each of L distances, the steering row vector corresponding to each distance is obtained based on a propagation delay corresponding to the distance, and the L distances include the P first distances and/or the Q second distances.

In an optional implementation, the weight vector W and the steering matrix V satisfy the following relationship:

$$W \times V + S = U,$$

where

S represents noise on a path of the L distances, and is a row vector whose quantity of columns is L; and U is a row vector including L elements corresponding to the L distances, all elements corresponding to the first distance are 1, and all elements corresponding to the second distance are 0.

In this aspect, for optional implementations and beneficial effects thereof, refer to the descriptions in the second aspect. Details are not described herein again.

According to a fifth aspect, this application provides a communication device, including a processor and an interface circuit. The processor is configured to obtain a weight vector W. The interface circuit is configured to send channel state information processed based on the weight vector W. Signal-to-noise ratios or energy of the processed channel state information at P first distances is enhanced, and/or signal-to-noise ratios or energy of the processed channel state information at Q second distances is suppressed, where P and Q are positive integers.

Optionally, the interface circuit is further configured to receive a request frame or send a response frame, or is further configured to receive a first frame or the like in the related step in the first aspect. Details are not described herein again. Optionally, the processor is further configured to determine, based on a first field in the first frame, the weight vector W or the like in the related step in the first aspect. Details are not described herein again.

Optionally, the communication device may further include a memory. The memory is configured to be coupled to the processor, and stores program instructions and data that are necessary for the communication device.

In this aspect, for other optional implementations and beneficial effects thereof, refer to the descriptions in the first aspect. Details are not described herein again.

According to a sixth aspect, this application provides a communication device, including an interface circuit. The interface circuit is configured to receive channel state information processed based on a weight vector W. Signal-to-noise ratios or energy of the processed channel state information at P first distances is enhanced, and/or signal-to-noise ratios or energy of the processed channel state information at Q second distances is suppressed, where P and Q are positive integers.

Optionally, the interface circuit is further configured to send a request frame or receive a response frame, or is further configured to send a first frame or the like in the optional implementation in the second aspect. Details are not described herein again. Optionally, the communication device may further include a processor. The processor is configured to process the received channel state information processed based on the weight vector W, to obtain a sensing result.

Optionally, the communication device may further include a memory. The memory is configured to be coupled to the processor, and stores program instructions and data that are necessary for the communication device.

In this aspect, for other optional implementations and beneficial effects thereof, refer to the descriptions in the second aspect. Details are not described herein again.

According to a seventh aspect, this application provides a computer-readable storage medium. The computer-readable storage medium stores instructions. The instructions may be executed by one or more processors on a processing circuit. When the instructions are run on a computer, the computer is enabled to perform the channel measurement method in the first aspect or the second aspect. Optionally, the computer-readable storage medium may be a non-volatile readable storage medium.

According to an eighth aspect, this application provides a computer program product including instructions. When the computer program product runs on a computer, the computer is enabled to perform the channel measurement method in the first aspect or the second aspect.

According to a ninth aspect, this application provides a chip or a chip system, including a processing circuit. The processing circuit may be configured to perform a related operation in the first aspect or the second aspect. Optionally, the chip or the chip system may further include an input/output interface. The input/output interface may be configured to output one or more of the following information: channel state information processed based on a weight vector W, a request frame, a response frame, a first frame, and the like.

**BRIEF DESCRIPTION OF DRAWINGS**

FIG. 1 is a diagram of a structure of a radio sensing system;
FIG. 2 is a diagram of a structure of another radio sensing system;
FIG. 3 is a diagram of an application scenario in which the radio sensing system shown in FIG. 2 is used in a home environment;
FIG. 4 is a diagram of a TB sensing measurement procedure;
FIG. 5 is a diagram of another TB sensing measurement procedure;
FIG. 6 is a diagram of a non-TB sensing measurement procedure;
FIG. 7 is a schematic flowchart of a channel measurement method according to an embodiment of this application;
FIG. 8 is a schematic flowchart of another channel measurement method according to an embodiment of this application;
FIG. 9 is a diagram of phases in a sensing method according to an embodiment of this application;
FIG. 10 is a diagram of a structure of a sensing measurement setup request frame;
FIG. 11 is a diagram of a structure of a Sensing Measurement Parameters Element;
FIG. 12 is a diagram of a structure of a Sensing Measurement Parameters field;
FIG. 13 is a schematic flowchart of a sensing measurement method according to an embodiment of this application;
FIG. 14 is a schematic flowchart of another sensing measurement method according to an embodiment of this application;
FIG. 15 is a diagram of a structure of a communication apparatus according to an embodiment of this application; and
FIG. 16 is a diagram of a structure of a communication device according to an embodiment of this application.

**DESCRIPTION OF EMBODIMENTS**

This application provides a channel measurement method. Channel measurement information obtained by using the channel measurement method is channel state information processed based on a weight vector W. The channel measurement information takes into account a requirement of enhancement and/or suppression at a distance, so that a sensing-related application is implemented by using the channel measurement information. This can effectively improve sensing performance.

This application may be applied to a wireless communication system. The wireless communication system may be a wireless local area network or a cellular network. For example, this application may be applied to a wireless local area network system of 802.11 series protocols, for example, a next-generation Wi-Fi protocol of IEEE 802.11ax such as 802.11be, Wi-Fi 7, or extremely high throughput (Extremely High Throughput, EHT), and for another example, a next generation of 802.11be, such as a system supporting Wi-Fi 8, ultra-high reliability (UltraHighReliability, UHR), and ultra-high reliability and throughput (UltraHighReliability and Throughput, UHRT); and may be further applied to a wireless personal area network system based on an ultra bandwidth UWB. The method may be implemented by a communication device in the wireless communication system or a chip or a processor in the communication device. The communication device may be an access point (access point, AP) or a station (station, STA). The AP and the STA may be single-link devices, or may be multi-link devices.

The AP is an apparatus having a wireless communication function, supports communication according to a WLAN protocol, and has a function of communicating with another device (for example, a STA or another AP) in the WLAN. Certainly, the AP may further have a function of communicating with another device. In a WLAN system, an AP may be referred to as an AP device or an AP station (AP STA). The apparatus having the wireless communication function may be an entire device, or may be a chip, a processing system, or the like installed on the entire device. The device in which the chip or the processing system is installed may implement a method and a function in embodiments of this application under control of the chip or the processing system. In embodiments of this application, the AP is an apparatus that provides a service for the STA, and may support the 802.11 series protocols. For example, the AP may be a communication entity such as a communication server, a router, a switch, or a bridge. The AP may include a macro base station, a micro base station, a relay station, and the like in various forms. Certainly, the AP may alternatively be a chip and a processing system in these devices in various forms, to implement the method and the function in embodiments of this application.

The STA is an apparatus having a wireless communication function, supports communication according to the WLAN protocol, and has a capability of communicating with another station or AP in the WLAN. In the WLAN system, a station may be referred to as a non-access point station (non-access point station, non-AP STA). For example, the STA is any user communication device that allows a user to communicate with an AP and further communicate with the WLAN. The apparatus may be an entire device, or may be a chip, a processing system, or the like installed on the entire device. The device in which the chip or the processing system is installed may implement the method and the function in embodiments of this application under control of the chip or the processing system. For example, the STA may be user equipment that can connect to the internet, for example, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), or a mobile phone; or may be an internet of things node in an internet of things, a vehicle-mounted communication apparatus in an internet of vehicles, an entertainment device, a game device or system, a global positioning system device, or the like. The STA may alternatively be a chip or a processing system in the foregoing terminals.

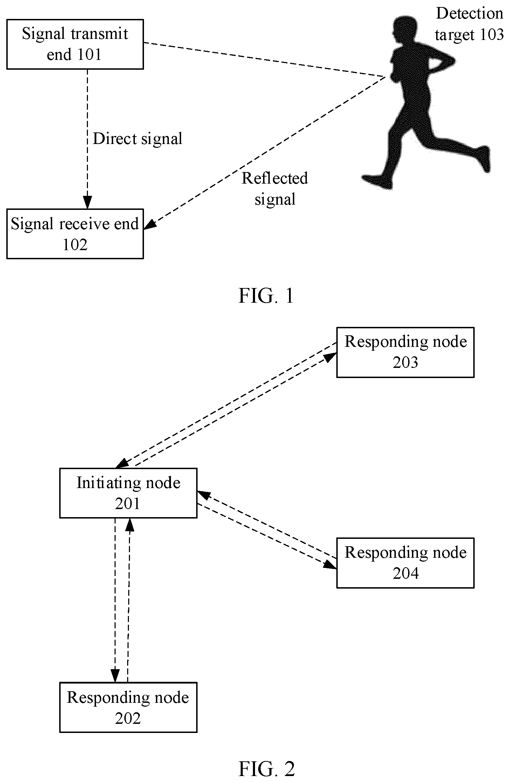

This application may be further applied to a sensing system. For example, FIG. 1 is a diagram of a structure of a radio sensing system. As shown in FIG. 1, the radio sensing system may include a signal transmit end 101 and a signal receive end 102. The signal transmit end 101 may be an AP or a STA, and the signal receive end 102 may be a STA or an AP. In the radio sensing system, there may be one or more signal transmit ends, and there may also be one or more signal receive ends. Optionally, the signal transmit end and the signal receive end may be disposed in a same physical device or different physical devices. This is not limited in embodiments of this application. The radio sensing system shown in FIG. 1 is described by using an example in which a person is a detection target 103 of sensing measurement.

As shown in FIG. 1, after the signal transmit end 101 sends a radio signal (for example, a reference signal used to detect a channel status or a signal used to transmit data or control information), the radio signal received by the signal receive end 102 includes a direct signal and a reflected signal reflected back by the detection target 103. When the detection target 103 moves, the reflected signal changes. In this way, a superimposed radio signal received by the signal receive end 102 also changes accordingly. In this case, the signal receive end 102 detects that a channel of a radio link changes. Generally, the channel of the radio link is quantized and represented as channel state information (channel state information, CSI) in a communication protocol. In this way, a change of the channel of the radio link is represented as a change of an amplitude and a phase of the CSI. It can be seen that, by analyzing the change of the CSI measured by the signal receive end 102 over time, a radio sensing technology can sense whether there is a person moving around and what specific actions are being taken.

The radio sensing technology may be applied to applications such as intrusion detection, elderly care, gesture recognition, breathing and sleep monitoring, and indoor population counting. In addition, human motion sensing based on a radio wave over conventional sensing based on a camera or a wearable device such as a wristband has the following advantages: 1. There is no hardware cost, and a wireless communication protocol can support measurement of interference to a radio channel in a CSI manner. 2. A user does not need to wear any device, and therefore interference to the user is small. In addition, it is convenient to monitor an elderly person, a child, and like, and also detect a non-cooperative target such as a thief intrusion. 3. The radio sensing technology has less impact on user privacy than the camera, and can be deployed in sensitive areas such as bedrooms and bathrooms. 4. The radio sensing technology can still effectively perform sensing under poor illumination conditions and with obstacles such as curtains and wooden furniture, and can also perform multi-room sensing across walls. 5. Radio sensing has very high precision, and can sense a tiny motion as weak as breathing at a centimeter scale.

For example, FIG. 2 is a diagram of a structure of another radio sensing system. As shown in FIG. 2, the radio sensing system may include an initiating node and a responding node. The initiating node is mainly configured to initiate a sensing measurement procedure (which may also be referred to as initiating a sensing measurement instance (sensing measurement instance)). The responding node is mainly configured to: participate in the sensing measurement procedure, and respond to the sensing measurement procedure initiated by the initiating node.

Optionally, a same communication device may play different roles at different moments. For example, the initiating node may be referred to as an initiator (initiator) or a sensing initiator (sensing initiator), and the responding node may be referred to as a responder (responder) or a sensing responder (sensing responder). For example, at a moment T1, the communication device serves as an initiator of the sensing measurement procedure, and performs a related operation of the initiator; and at a moment T2, the communication device may serve as a responder of the sensing measurement procedure, and participate in a sensing measurement procedure initiated by another communication device. Optionally, at a same moment, a same communication device not only acts as an initiator of the sensing measurement procedure, but also acts as a responder of the sensing measurement procedure.

The radio sensing system shown in FIG. 2 is described by using an example in which there is one initiating node, for example, an initiating node 201, and three responding nodes that participate in the sensing measurement procedure, for example, a responding node 202, a responding node 203, and a responding node 204. In a case, the initiating node may serve as a signal transmit end to transmit a sensing measurement frame, the responding node feeds back measured CSI to the initiating node, and the initiating node processes the CSI to obtain sensing information. In another case, the initiating node serves as a signal receive end, the responding node sends a sensing measurement frame, and the initiating node measures and obtains CSI to process the CSI to obtain sensing information.

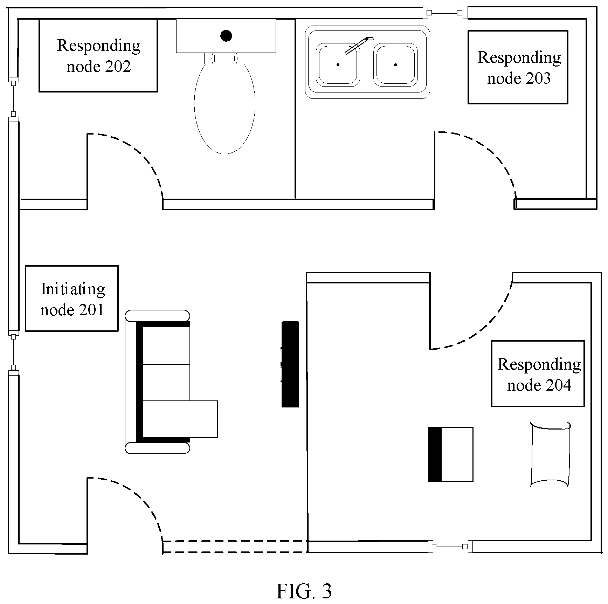

For example, the radio sensing system shown in FIG. 2 may be deployed in an indoor scenario, for example, a home environment or an office environment, to obtain sensing information of the indoor scenario. An application scenario in which the radio sensing system shown in FIG. 2 is deployed in a home environment shown in FIG. 3 is used as an example. The initiating node 201 may be a wireless router in the home environment, and a wireless device in the home environment may serve as a responding node. For example, in the home environment shown in FIG. 3, a wireless device in a bathroom may serve as the responding node 202, a wireless device in a kitchen serves as the responding node 203, and a wireless device in a bedroom may serve as the responding node 204. The initiating node may interact with the plurality of responding nodes in FIG. 3 separately to perform the sensing measurement procedure, obtain channel measurement data, and obtain sensing information, to monitor the entire home environment. For example, a link between the initiating node 201 and the responding node 202 may be used to sense and measure an action condition in the bathroom. If a sliding action is detected, the initiating node 201 may send a warning in a timely manner to notify a medical personnel. A link between the initiating node 201 and the responding node 204 may be used to sense and measure an action condition in the bedroom, to detect a sleep condition of a user. A link between the initiating node 201 and the responding node 203 may be used to sense and measure a walking condition of a person in the kitchen, to detect whether a person moves in the current kitchen.

For ease of understanding, several optional sensing measurement procedures are first described in this application.

A sensing measurement procedure in which an Initiator serves as a signal transmit end and a Responder serves as a signal receive end includes two types. One is a TB sensing measurement procedure. In the procedure, an AP serves as an Initiator, and may send a sensing polling trigger frame (Sensing Polling Trigger frame), to poll whether one or more STAs can participate in current sensing measurement. A STA serves as a Responder, and the STA that agrees to participate in the current sensing measurement may feed back a CTS-to-Self frame, to acknowledge participation in sensing measurement. The other one is a non-TB sensing measurement procedure. In this procedure, a STA serves as an Initiator, and an AP serves as a Responder. There is no need to use a trigger mechanism (for example, a sensing polling trigger frame) to transmit a packet. Instead, based on a random contention access mechanism, a sensing NDPA frame is used to notify a Sensing Responder that a next frame is a sensing measurement frame and of a related parameter of the sensing measurement frame. In this way, the AP may feed back CSI to the STA. A sensing procedure includes three phases: a sensing session setup phase, a sensing measurement setup phase, and a measurement instance phase. The following describes the sensing measurement procedure.

1. TB sensing measurement procedure

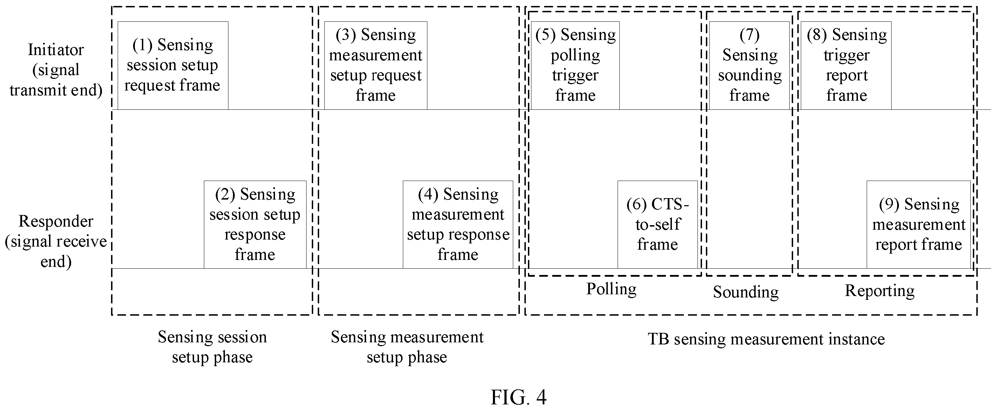

FIG. 4 is a diagram of a TB sensing measurement procedure.

In the sensing session setup phase: (1) The Initiator sends a sensing session setup request (sensing session setup request) frame, to a Responder(s) that the Initiator expects to set up a sensing session, used to request to set up the sensing session; and (2) after receiving the sensing session setup request frame, the Responder(s) that agrees to set up the sensing session may feed back a sensing session setup response (sensing session setup response) frame, used to acknowledge setup of the sensing session. The sensing session setup phase may also be referred to as a sensing session setting phase, and its purpose is to implement that both sensing parties agree to set up a CSI-based sensing session.

In the sensing measurement setup phase: (3) The Initiator sends a sensing measurement setup request (sensing measurement setup request) frame, to the Responder(s), used to request to enable sensing measurement with the Responder(s); and (4) after receiving the sensing measurement setup request frame, the Responder(s) that agrees to enable sensing measurement may feed back a sensing measurement setup response (sensing measurement setup response) frame, used to acknowledge enabling of sensing measurement between the Responder(s) and the Initiator. The sensing measurement setup phase may also be referred to as a sensing measurement setting phase, and is used to set operations such as a configuration, a role, a parameter, and matching of each node participating in sensing measurement.

In the sensing measurement instance phase: This phase may include three sub-phases: polling (polling), sounding (sounding), and reporting (reporting). In the polling sub-phase: (5) The Initiator sends a sensing polling trigger frame, to the Responder(s), used to query whether the Responder(s) participates in the sensing measurement; and (6) the Responder(s) participating in the sensing measurement may send a CTS-to-Self frame, to acknowledge participation in the sensing measurement. In the sounding sub-phase: (7) The Initiator sends a sensing sounding (sensing sounding) frame (which may be a null data packet NDP) to the Responder(s), and then the Responder(s) may perform channel estimation by using the received sensing sounding frame, to obtain CSI. In the reporting sub-phase: (8) The Initiator sends a sensing trigger report frame (sensing trigger report frame), to the Responder(s), used to trigger the Responder(s) to feed back the obtained CSI to the Initiator; and (9) the Responder(s) sends a sensing measurement report (sensing measurement report) frame to the Initiator, where the sensing measurement report frame carries the obtained CSI.

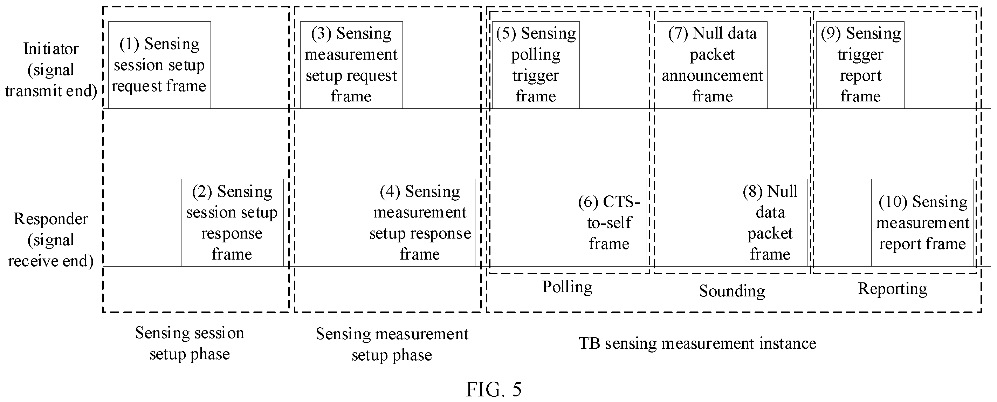

In an optional implementation, in comparison with the TB sensing measurement procedure shown in FIG. 4, in a sounding sub-phase of a measurement instance phase in the TB sensing measurement procedure shown in FIG. 5: (7) The Initiator sends an NDPA frame to the Responder(s), where the NDPA frame is used to notify the Responder(s) that a next frame is an NDP frame and of a related parameter of the NDP frame; and (8) the Initiator sends the NDP frame to the Responder(s), and then performs a related operation in a Reporting sub-phase.

In this application, frames transmitted in each phase in the TB sensing measurement procedure may include but are not limited to some or all types of frames described in the foregoing implementations.

2. Non-TB sensing measurement procedure

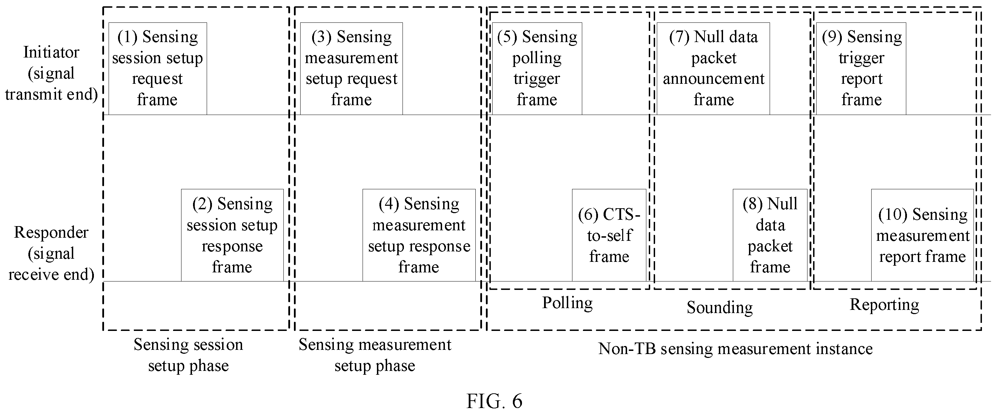

FIG. 6 is a diagram of a non-TB sensing measurement procedure. A sensing session setup phase and a sensing measurement setup phase shown in FIG. 6 are the same as related content described in FIG. 4. Details are not described herein again. A sensing measurement instance phase shown in FIG. 6 is a non-TB sensing measurement instance phase: (5) The Initiator sends an NDPA frame to the Responder(s), where the NDPA frame is used to notify the Responder(s) that a next frame is an NDP frame and of a related parameter of the NDP frame; (6) the Initiator sends an NDP frame to the Responder(s); and (7) the Responder(s) performs channel estimation by using the received NDP frame, obtains CSI, and sends a sensing measurement report frame to the Initiator, where the sensing measurement report frame carries the obtained CSI.

From a perspective of whether the Responder needs to feed back a sensing measurement report, a sensing instance solution in the sensing measurement procedure may be classified into two types: The sensing measurement report needs to be fed back and does not need to be fed back. The foregoing two sensing measurement procedures are all of the type of which the sensing measurement report needs to be fed back. In the type of which the sensing measurement report does not need to be fed back, the Responder may perform a sensing-related application directly by using CSI. In other words, the Responder does not need to feed back the CSI, and the Responder performs sensing by using the CSI.

The descriptions of the system architecture and/or the application scenario of the channel measurement method provided in embodiments of this application are intended to describe technical solutions in embodiments of this application more clearly, and do not constitute a limitation on the technical solutions provided in embodiments of this application.

In this application, frames transmitted in each phase in the non-TB sensing measurement procedure may include but are not limited to some or all types of frames described in the foregoing implementations.

Optionally, the "frame" described in this application may also be described as a "packet", a "message", or the like. For example, the sensing session setup request frame may be described as a sensing session setup request packet, and the sensing session setup response frame may be described as a sensing session setup response packet. Details are not enumerated herein.

For the type of which the sensing measurement report needs to be fed back, the responder needs to send CSI obtained through measurement to the initiator in a wireless manner, and requirements of both radio bandwidth resources and a processing capability of the initiator are high. For the type of which the sensing measurement report does not need to be fed back, the initiator needs to process CSI obtained through measurement to obtain sensing information, and a requirement of a processing capability of the initiator is high. Therefore, when the radio bandwidth resources are limited, or processing capabilities of the initiator and the responder are limited, how to improve sensing performance is an urgent problem to be resolved.

This application provides a channel measurement method. Channel measurement information obtained by using this method not only takes into account a requirement of enhancement and/or suppression at a distance, but also greatly reduces an amount of data to be transmitted or processed by using this method in comparison with sensing information obtained directly by using CSI. Therefore, using the channel measurement information obtained by using this method to implement a sensing-related application can effectively improve sensing performance. The following provides a detailed description with reference to the accompanying drawings.

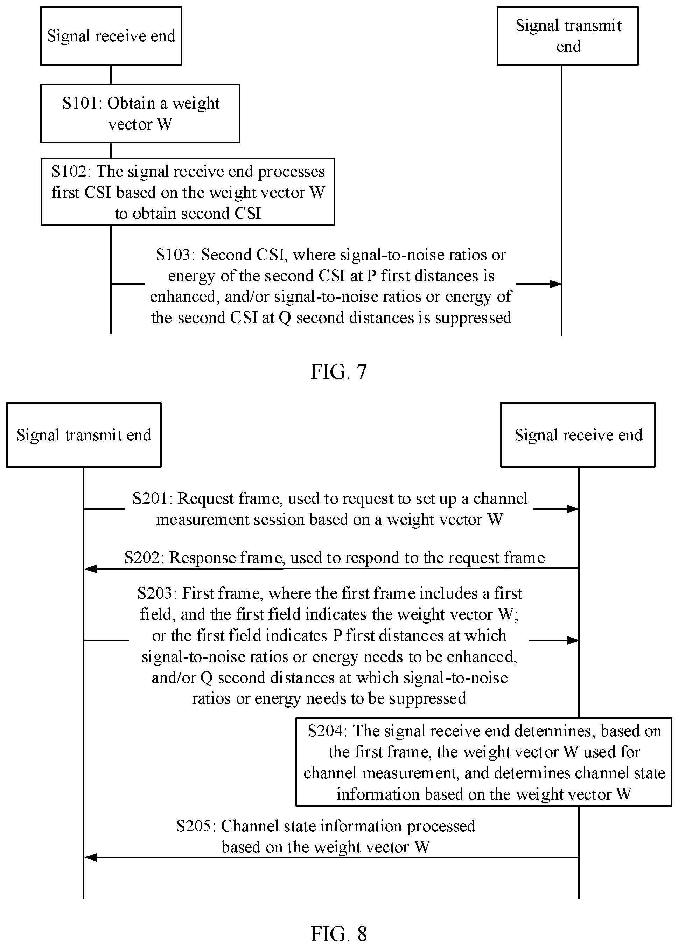

FIG. 7 is a schematic flowchart of a channel measurement method according to an embodiment of this application. The channel measurement method shown in FIG. 7 is described from a perspective of interaction between a signal transmit end and a signal receive end. FIG. 7 is described by using an example in which the signal transmit end serves as an initiator of channel measurement, the signal receive end is a responder of channel measurement, and the signal receive end needs to feed back channel measurement information obtained through processing to the signal transmit end.

In addition, for ease of description, in this application, the channel measurement information is classified into two types: first CSI and second CSI. The first CSI is channel measurement information directly obtained by the signal receive end by performing channel estimation by using a received radio signal. The second CSI is channel measurement information obtained by processing the first CSI by using a weight vector W.

As shown in FIG. 7, the channel measurement method may include but is not limited to the following steps.

S101: The signal receive end obtains the weight vector W.

In an optional implementation, the weight vector W is sent by the signal transmit end. For example, the signal transmit end needs to perform sensing measurement on locations of P first distances away from the signal receive end according to a sensing requirement, and does not need to perform sensing measurement on locations of Q second distances away from the signal receive end. In this case, the signal transmit end may send the weight vector W to the signal receive end, and the weight vector W is used to enhance signal-to-noise ratios or energy at the P first distances, and/or suppress signal-to-noise ratios or energy at the Q second distances. For ease of description, a distance at which a signal-to-noise ratio or energy needs to be enhanced is referred to as a first distance, and a distance at which a signal-to-noise ratio or energy needs to be suppressed is referred to as a second distance.

In another optional implementation, the weight vector W is obtained by the signal receive end through calculation based on information that is about the P first distances and/or the Q second distances and that is sent by the signal transmit end. Optionally, that the signal receive end determines the weight vector W based on the P first distances and/or the Q second distances includes: determining a steering matrix V based on the P first distances and/or the Q second distances, where the steering matrix V includes a steering row vector corresponding to each of L distances, the steering row vector corresponding to each distance is obtained based on a propagation delay corresponding to the distance, and the L distances include the P first distances and/or the Q second distances; and determining the weight vector W based on the steering matrix V. Optionally, in this application, the L distances may also be referred to as L paths. That is, the L paths are propagation paths that respectively have corresponding propagation delays.

Optionally, the weight vector W and the steering matrix V satisfy the following relationship:

$$W \times V + S = U \quad (1)$$

S represents noise on a path of the L distances, and is a row vector whose quantity of columns is L; and U is a basis vector including L elements corresponding to the L distances, elements corresponding to the first distance in the basis vector are 1, and all elements corresponding to the second distance are 0.

For example, assuming that delay time that is of the L paths corresponding to the L distances and that is predicted through spectrum analysis is $[\tau_1, \tau_2, ..., \tau_L]$, and a bandwidth of a radio signal used for channel measurement is N subcarriers, for delay time $\tau_i$ of an $i^{th}$ path, a steering vector (steering vector) $v(\tau_i)$ is as follows:

$$v(\tau_i) = \begin{bmatrix} 1, & e^{j2\pi \Delta f \cdot \tau_i}, & ..., & e^{j2\pi(N-1)\Delta f \cdot \tau_i} \end{bmatrix}^T \quad (2)$$

$\Delta f$ is a bandwidth of one subcarrier. Then, for delay time $[\tau_1, \tau_2, ..., \tau_L]$ of all the paths (namely, the L paths), the steering matrix (matrix of steering vectors) V may be expressed as follows:

$$V = \begin{bmatrix} v(\tau_1), & v(\tau_2), & ..., & v(\tau_L) \end{bmatrix}^T \quad (3)$$

Assuming that, in the L distances, P is equal to 1, Q is equal to L-1, and the first distance is a distance corresponding to a path *l*, that is, the weight vector W is used to enhance a signal-to-noise ratio or energy on the path *l*, and suppress signal-to-noise ratios or energy on remaining paths, in the basis vector U, an $l^{th}$ element is 1, and remaining elements are all 0, namely, U= [0, ..., 0, 1, 0, ..., 0, 0]$_{1 \times L}$.

In this case, a relationship that the weight vector W and the steering matrix V satisfy may be expressed as follows:

$$W \times \left[ v(\tau_1), \quad v(\tau_2), \quad ..., \quad v(\tau_L) \right]^T + S = U \quad (4)$$

According to the formula (3), a matrix operation is performed, so that the weight vector W can be obtained as follows:

$$W = U \times V^H \times (V \times V^H + S)^{-1} \quad (5)$$

$V^H$ represents a conjugate transposition matrix of the steering matrix V, and ()$^{-1}$ represents an inverse matrix of a matrix obtained by performing an operation in parentheses.

S102: The signal receive end processes the first CSI based on the weight vector W to obtain the second CSI.

Signal-to-noise ratios or energy of the second CSI at the P first distances is enhanced, and/or signal-to-noise ratios or energy of the second CSI at the Q second distances is suppressed, where both P and Q are positive integers. Optionally, the second CSI may be a vector or a value, and is related to a quantity of first distances at which enhancement is required. The first CSI is obtained by the signal receive end by performing channel estimation by using the received radio signal. Correspondingly, before step S102, the signal transmit end may send a radio signal; and correspondingly, the signal receive end receives the radio signal. The radio signal received by the signal receive end is a signal obtained after channel attenuation is performed on the radio signal sent by the signal transmit end, for example, a direct signal including the radio signal, or a reflected signal that is of the radio signal and that is reflected by an object in an environment.

In an optional implementation, the processing the first CSI based on the weight vector W to obtain the second CSI in step S102 may include: performing a point product operation on the weight vector W and the first CSI, to obtain a point product operation result as the second CSI. Optionally, the second CSI may be a truncated indication power (truncated PDP), which is denoted as PDP $_{truncated}$, or may be channel measurement information of a truncated channel impulse response (truncated Channel Impulse Response, truncated CIR). The following uses the truncated PDP as an example for description.

In another optional implementation, the processing the first CSI based on the weight vector W to obtain the second CSI in step S102 may include: performing a point product operation on the weight vector W and the first CSI, to obtain channel measurement information truncated PDP; and performing modulo processing on the channel measurement information truncated PDP, to obtain a modulus of the truncated PDP as the second CSI. Optionally, the second CSI in this implementation may be denoted as |PDP $_{truncated}$|.

In still another optional implementation, the processing the first CSI based on the weight vector W to obtain the second CSI in step S 102 may include: performing a point product operation on the weight vector W and the first CSI, to obtain channel measurement information truncated PDP; and performing modulo simplification processing on the channel measurement information truncated PDP, to obtain a square of a modulus of the truncated PDP as the second CSI. Optionally, the second CSI in this implementation may be denoted as |PDP $_{truncated}$|$^2$.

In still another optional implementation, the processing the first CSI based on the weight vector W to obtain second CSI in step S 102 may include: performing a point product operation on the weight vector W and the first CSI, to obtain channel measurement information truncated PDP; performing modulo simplification processing on the channel measurement information truncated PDP, to obtain channel measurement information |truncated PDP|$^2$; and performing linear fitting processing on the channel measurement information |truncated PDP|$^2$, and using a result obtained after linear fitting processing as the second CSI. Optionally, the second CSI in this implementation may be denoted as |PDP $_{truncated}$|$^2$ obtained after linear fitting processing.

The following uses a single transmit antenna and a single receive antenna as an example to describe the channel measurement information between the signal transmit end and the signal receive end in step S102. Assuming that a bandwidth of a radio signal used for channel measurement between the signal transmit end and the signal receive end is N subcarriers, the first CSI is a dimension 1*N matrix, and the first CSI may be represented as follows:

$$\begin{bmatrix} H(f_1,t) \\ H(f_2,t) \\ \dots \\ H(f_N,t) \end{bmatrix} \quad (6)$$

$f_1$, $f_2$, $\cdots$ $f_N$ respectively represent frequency channel numbers of the N subcarriers arranged in ascending order of frequencies, and $H(f_n,t)$ represents a channel response of a subcarrier $f_n$, where a value of n may range from 1 to N. The channel response $H(f_n,t)$ is represented in a complex number form in a polar coordinate system, and may be represented as follows:

$$H(f_n,t)=\left[ e^{-j2\pi\theta_n t}\left( H_{sn}e^{\varepsilon_n j} + \alpha_{ln}e^{-j2\pi f_n \tau_l(t)} \right) \right] \quad (7)$$

$\theta_n$ represents a phase offset that is of the subcarrier $f_n$ and that is caused by a sampling time offset (sampling Time Offset, STO), a carrier frequency offset (Carrier Frequency Offset, CFO), a phase-locked loop (phase-locked loop, PLL), or the like. It is assumed that, in an environment in which the signal transmit end and the signal receive end are located, there are L propagation paths of a radio signal transmitted by the signal transmit end, where a path $l$ is a path reflected by a moving object. An amplitude $\alpha_{ln}$ and a phase $2\pi f_n \tau_l(t)$ of an $l^{th}$ path on the subcarrier $f_n$ change with time, and remaining paths are static paths. Therefore, a frequency domain response of the remaining paths on the subcarrier $f_n$ is referred to as a static part, and is represented by $H_{sn}e^{\varepsilon nj}$. $H_{sn}$ represents an amplitude in a frequency response of the static path, and $\varepsilon_n$ represents a phase offset in the frequency response of the static path.

Correspondingly, according to the formula (7), if channel responses from $f_1$ to $f_N$ are expanded, the formula (6) is represented as follows:

$$\begin{bmatrix} H(f_1,t) \\ H(f_2,t) \\ \dots \\ H(f_N,t) \end{bmatrix} = \begin{bmatrix} e^{-j2\pi\theta_1 t}\left( H_{s_1}e^{\varepsilon_1 j} + \alpha_{l1}e^{-j2\pi f_1 \tau_l(t)} \right) \\ e^{-j2\pi\theta_2 t}\left( H_{s2}e^{\varepsilon_2 j} + \alpha_{l2}e^{-j2\pi f_2 \tau_l(t)} \right) \\ \dots \\ e^{-j2\pi\theta_N t}\left( H_{sN}e^{\varepsilon_N j} + \alpha_{lN}e^{-j2\pi f_N \tau_l(t)} \right) \end{bmatrix} \quad (8)$$

It is assumed that a complex number form of the weight vector W obtained by the signal receive end in the polar coordinate system is as follows:

$$\begin{aligned} W &= \begin{bmatrix} w_1 & w_2 & \dots & w_N \end{bmatrix} \\ &= \begin{bmatrix} \omega_1 e^{\phi_1 j} & \omega_2 e^{\phi_2 j} & \dots & \omega_N e^{\phi_N j} \end{bmatrix} \end{aligned} \quad (9)$$

$w_1$, $w_2$, $\cdots$ $w_N$ respectively represent weights of the N subcarriers arranged in ascending order of the frequencies, where $\omega_1$ to $\omega_N$ respectively represent amplitude factors on the N subcarriers, and $\phi_1$ to $\phi_N$ respectively represent phase factors on the N subcarriers.

Assuming that the first CSI is shown in the formula (8), and the weight vector W is shown in the formula (9), the truncated PDP obtained by performing the point product operation on the weight vector W and the first CSI may be as follows:

$$PDP_{truncated} = \begin{bmatrix} \omega_1 e^{\phi_1 j} & \omega_2 e^{\phi_2 j} & \dots & \omega_N e^{\phi_N j} \end{bmatrix} \cdot \begin{bmatrix} e^{-j2\pi\theta_1 t}\left(H_{s1}e^{\varepsilon_1 j} + \alpha_{l1}e^{-j2\pi f_1\tau_l(t)}\right) \\ e^{-j2\pi\theta_2 t}\left(H_{s2}e^{\varepsilon_2 j} + \alpha_{l2}e^{-j2\pi f_2\tau_l(t)}\right) \\ \dots \\ e^{-j2\pi\theta_N t}\left(H_{sN}e^{\varepsilon_N j} + \alpha_{lN}e^{-j2\pi f_N\tau_l(t)}\right) \end{bmatrix} \quad (10)$$

$$= \omega_1 e^{\phi_1 j} \cdot e^{-j2\pi\theta_1 t}\left(H_{s1}e^{\varepsilon_1 j} + \alpha_{l1}e^{-j2\pi f_1\tau_l(t)}\right)$$

$$+ \omega_2 e^{\phi_2 j} \cdot e^{-j2\pi\theta_2 t}\left(H_{s2}e^{\varepsilon_2 j} + \alpha_{l2}e^{-j2\pi f_2\tau_l(t)}\right) + \cdots$$

$$+ \omega_N e^{\phi_N j} \cdot e^{-j2\pi\theta_N t}\left(H_{sN}e^{\varepsilon_N j} + \alpha_{lN}e^{-j2\pi f_N\tau_l(t)}\right)$$

Perform modulo simplification processing on the truncated PDP, to obtain a square of a modulus of the truncated PDP, namely, |truncated PDP|$^2$, which may be as follows:

$$\left|PDP_{truncated}\right|^2 = \sum_{i=1}^{N}\omega_i^2\alpha_{li}^2 + \sum_{k=1}^{N}\omega_k H_{sk}\sum_{i=1}^{N}\omega_i\alpha_{li}\cos\left(2\pi f_i\tau_l(t) - \phi_i + 2\pi\theta_i t + \varepsilon_k + \phi_k - 2\pi\theta_k t\right) \quad (11)$$

$\theta_i$ and $\theta_k$ are phase offsets that are of a subcarrier $f_i$ and a subcarrier $f_k$ and that are caused by a packet detection delay, a sampling time offset (sampling Time Offset, STO), a carrier frequency offset (Carrier Frequency Offset, CFO), a phase-locked loop (phase-locked loop, PLL), or the like. In one data packet, for the subcarrier $f_i$ and the subcarrier $f_k$, a packet detection delay and an STO are the same. Therefore, after linear fitting elimination processing is performed on |truncated PDP|$^2$, |truncated PDP|$^2$ obtained after linear fitting processing may be as follows:

$$\left|PDP_{truncated}\right|^2 = \sum_{i=1}^{N}\omega_i^2\alpha_{li}^2 + \sum_{k=1}^{N}\omega_k H_{sk}\sum_{i=1}^{N}\omega_i\alpha_{li}\cos\left(2\pi f_i\tau_l(t) - \phi_i + \varepsilon_k + \phi_k\right) \quad (12)$$

It can be seen that, for each piece of the optional second CSI, a signal-to-noise ratio or energy at one first distance (namely, the distance corresponding to the path *l*) is enhanced, and signal-to-noise ratios or energy at remaining L-1 second distances (namely, distances corresponding to L-1 paths other than the path *l*) are suppressed. In addition, it may be learned from each piece of the optional second CSI that a length of the path *l* changes with time, so that a moving speed of a moving object on the path *l* may be deduced. Therefore, as a type of channel measurement information, the second CSI may be used to obtain sensing information, which is the same as the first CSI.

S103: The signal receive end sends the second CSI to the signal transmit end; and correspondingly, the signal transmit end receives the second CSI.

Optionally, in the channel measurement method, the signal receive end may send second CSI to a third party, for example, a sensing information processing device, and the sensing information processing device processes the second CSI to obtain sensing information. Signal-to-noise ratios or energy of the second CSI at the P first distances is enhanced, and/or signal-to-noise ratios or energy of the second CSI at the Q second distances is suppressed.

It can be learned that, in the channel measurement method, the second CSI may be a complex number (for example, PDP $_{truncated}$ shown in the formula (10)) or a real number (for example, |PDP $_{truncated}$|$^2$ shown in the formula (11) or |PDP $_{truncated}$|$^2$ shown in formula (12)), and the first CSI shown in the formula (8) is a multi-dimensional vector or matrix. Therefore, a data amount of the channel measurement information obtained by using the channel measurement method is greatly reduced. In comparison with a manner of obtaining sensing information directly by using first CSI, the channel measurement method provided in this application can effectively improve sensing effect when a radio bandwidth is limited or a processing capability of the sensing information processing device is limited. In addition, the second CSI takes into account information about a distance at which enhancement or suppression is required. In this way, in a sensing application in which sensing information is obtained based on the second CSI, sensing performance may be greatly improved.

Based on the weight vector W-based channel measurement method shown in FIG. 7, FIG. 8 is a schematic flowchart of another channel measurement method. The channel measurement method shown in FIG. 8 is described by using an example in which a channel measurement method based on a weight vector W is set up between a signal transmit end and a signal receive end. The channel measurement method may include but is not limited to the following steps.

S201: The signal transmit end sends a request frame to the signal receive end; and correspondingly, the signal receive end receives the request frame.

The request frame is used to request to set up the channel measurement session based on the weight vector W. Optionally, the request frame may carry indication information, and the indication information indicates to request to set up the channel measurement session based on the weight vector W. For example, the indication information may be a measurement type field, indicating to request to set up the channel measurement session based on the weight vector W.

S202: The signal receive end sends a response frame to the signal transmit end; and correspondingly, the signal transmit end receives the response frame, where the response frame is used to respond to the request frame.

Optionally, the response frame may carry indication information that is the same as that in the request frame, to indicate to agree to set up the channel measurement session based on the weight vector W.

S203: The signal transmit end sends a first frame to the signal receive end; and correspondingly, the signal receive end receives the first frame.

In an optional implementation, the first frame includes a first field, and the first field indicates the weight vector W. For example, the first field may carry the weight vector W, for example, information such as an amplitude and a phase of each element in the weight vector shown in the formula (9). For another example, the first field may carry an index of the weight vector W, and the signal receive end may determine the corresponding weight vector based on the index. Optionally, an optional weight vector may be locally stored in two parties of channel measurement. In this way, a weight vector used in the current channel measurement may be learned based on an index of a weight vector indicated by a peer end.

In another optional implementation, the first frame includes a first field, and the first field indicates P first distances at which signal-to-noise ratios or energy needs to be enhanced, and/or Q second distances at which signal-to-noise ratios or energy needs to be suppressed. In this way, the signal receive end may determine the weight vector W based on the distance information. Optionally, for a method for calculating the weight vector W, refer to related content of the formulas (1) to (5) in FIG. 7. Details are not described herein again.

In an optional implementation, the first frame further includes a second field, and the second field indicates that the first field indicates the weight vector W, or indicates the P first distances at which the signal-to-noise ratios or the energy needs to be enhanced, and/or the Q second distances at which the signal-to-noise ratios or energy needs to be suppressed. For example, if the second field is a first value, for example, 1, the first field indicates the weight vector W; or if the second field is a second value, for example, 2, the first field indicates the P first distances at which the signal-to-noise ratios or the energy needs to be enhanced, and/or the Q second distances at which the signal-to-noise ratios or the energy needs to be suppressed.

S204: The signal receive end determines, based on the first frame, the weight vector W used for channel measurement, and determines channel state information based on the weight vector W.

Optionally, the signal receive end determines a related operation of the channel state information based on the weight vector W. For example, the signal transmit end sends a radio signal, and the signal receive end performs channel estimation on the received radio signal to obtain first CSI, and then processes the first CSI based on the weight vector W to obtain second CSI, namely, the channel state information processed based on the weight vector W. For details, refer to related content in the channel measurement method described in FIG. 7. Details are not described herein again.

S205: The signal receive end sends the channel state information processed based on the weight vector W to the signal transmit end; and correspondingly, the signal transmit end receives the channel state information processed based on the weight vector W.

Optionally, step S205 may include: The signal receive end sends a feedback frame to the signal transmit end. The feedback frame includes the channel state information processed based on the weight vector W, and a value of a feedback type field in the feedback frame may indicate that the feedback frame includes the channel state information processed based on the weight vector W.

Optionally, before sending the feedback frame to the signal transmit end, the signal receive end may further receive a trigger frame. A value of a feedback type field in the trigger frame is used to trigger sending of the channel state information processed based on the weight vector W. Optionally, the trigger frame may be a sensing trigger report frame.

Optionally, the feedback type field may use a value shown in Table 1 to indicate to feed back channel state information of a corresponding type. For example, as shown in Table 1, the value of the feedback type field is 0, indicating that channel state information that triggers feedback or is fed back is channel state information directly obtained through channel estimation; and the value of the feedback type field is 1, indicating that channel state information that triggers feedback or is fed back is the channel state information processed based on the weight vector W.

Table 1

| Feedback type field | Meaning |
| --- | --- |
| 0 | Channel state information obtained through channel estimation (namely, the first CSI described in this specification) |
| 1 | Channel state information processed based on the weight vector W (namely, the second CSI described in this specification) |

It can be learned that FIG. 8 provides a channel measurement method based on the weight vector W. In the method, before channel measurement, the channel measurement session based on the weight vector W is set up through negotiation based on the request frame and the response frame, and a weight vector used for channel measurement or the distance information is exchanged by using the first frame. In this way, the signal receive end may obtain the channel state information processed based on the weight vector during channel measurement, and feed back the channel state information to the signal transmit end. It can be learned that a data amount of channel measurement information exchanged in the method is greatly reduced. This reduces a requirement of a radio bandwidth.

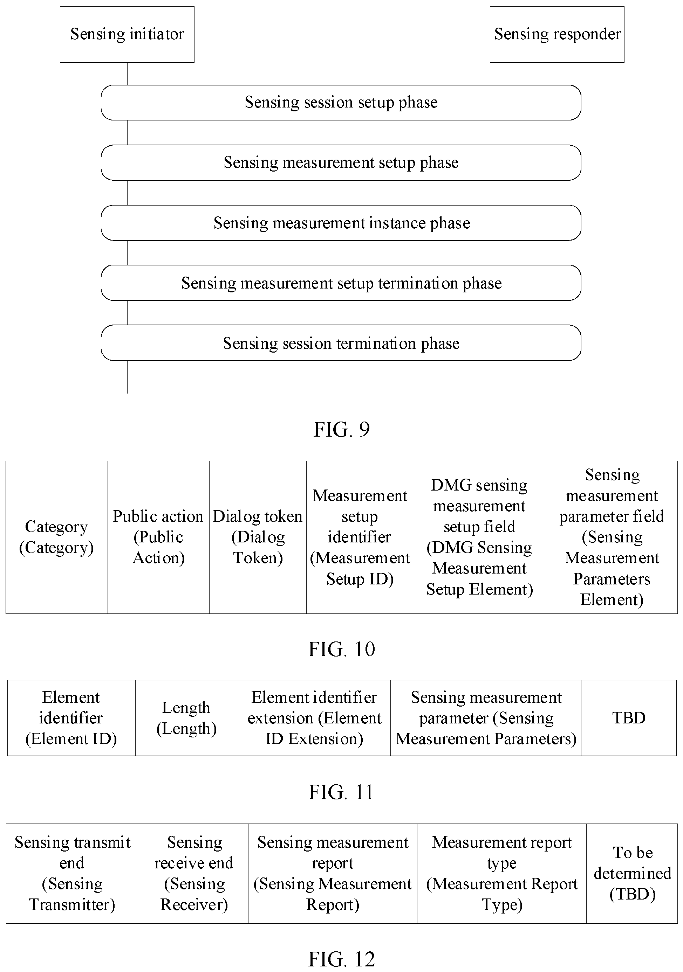

With reference to FIG. 9, an embodiment of this application further provides a schematic flowchart of a sensing method. The sensing method shown in FIG. 9 is proposed based on the weight vector W-based channel measurement method shown in FIG. 8. That is, the sensing method is a sensing method based on the weight vector W. For example, the weight vector W-based channel measurement session set up through negotiation in FIG. 8 may correspond to a sensing session setup phase shown in FIG. 9. The first frame used for exchanging the weight vector used for channel measurement or the distance information in FIG. 8 may be a related frame in a sensing measurement setup phase or a related frame in a sensing measurement instance phase. In this way, the channel measurement information used for sensing feedback is no longer the first CSI but the second CSI. For example, the weight vector W-based sensing method shown in FIG. 9 includes but is not limited to the following three phases shown in FIG. 4 or FIG. 5.

**Sensing session setup phase,** for example, the sensing session setup phase shown in FIG. 4 to FIG. 6: This phase is used by two sensing parties (namely, a sensing initiator (Sensing Initiator) and a sensing responder (Sensing Responder)) to exchange and specify a parameter related to sensing session setup. Optionally, the parameter related to sensing session setup in this phase may include identification information of a sensing session based on the weight vector W. In this way, a sensing procedure (sensing procedure) that the two sensing parties in this phase may exchange or specify is the sensing session based on the weight vector W.

**Sensing measurement setup phase,** for example, the sensing measurement setup phase shown in FIG. 4 to FIG. 6: When the weight vector W used by the two sensing parties to perform sensing measurement, or the distance information of the P first distances and/or the Q second distances remains unchanged (that is, the weight vector W used in a plurality of sensing measurement instance phases in the sensing measurement setup phase, or the distance information of the P first distances and/or the Q second distances remains unchanged), the weight vector W, or the distance information of the P first distances and/or the Q second distances may be exchanged in this phase. For example, a sensing measurement setup request frame sent by the Sensing Initiator to the Sensing Responder may carry information about the weight vector W used in the sensing measurement setup phase, or the distance information of the P first distances and/or the Q second distances. Correspondingly, if the Sensing Responder agrees to enable sensing measurement based on the weight vector W after receiving the sensing measurement setup request frame, the Sensing Responder may feed back a sensing measurement setup response frame to the Sensing Initiator. Optionally, the sensing measurement setup response frame may include a third field, indicating to agree to enable sensing measurement based on the weight vector W. Optionally, the sensing measurement setup response frame may alternatively include the information about the weight vector W in this phase, or the distance information of the P first distances and/or the Q second distances, to ensure that the two sensing parties know or obtain a same weight vector to facilitate subsequent sensing measurement.

For example, FIG. 10 is a diagram of a structure of a sensing measurement setup request frame. As shown in FIG. 10, the sensing measurement setup request frame may include but is not limited to one or more of the following elements or fields: a category (Category), a public action (Public Action), a dialog token (Dialog Token), a measurement setup identifier (Measurement Setup ID), a DMG sensing measurement setup element (DMG Sensing Measurement Setup Element), and a sensing measurement parameter element (Sensing Measurement Parameters Element). In this phase, information that needs to be exchanged, such as the information about the weight vector W or the distance information of the P first distances and/or the Q second distances, may be carried in the Sensing Measurement Parameters Element and/or another field shown in FIG. 10.

For example, FIG. 11 is a diagram of a structure of a Sensing Measurement Parameters Element. As shown in FIG. 11, the Sensing Measurement Parameters Element includes but is not limited to the following fields: an element identifier (Element ID), a length (Length), element identifier extension (Element ID Extension), a sensing measurement parameter (Sensing Measurement Parameters), and TBD. In this phase, information that needs to be exchanged, such as the information about the weight vector W or the distance information of the P first distances and/or the Q second distances, may be carried in the Sensing Measurement Parameters field and/or another field in the Sensing Measurement Parameters Element shown in FIG. 11.

For example, FIG. 12 is a diagram of a structure of a Sensing Measurement Parameters field. As shown in FIG. 12, the Sensing Measurement Parameters field includes but is not limited to the following subfields: a sensing transmit end (Sensing Transmitter), a sensing receive end (Sensing Receiver), a sensing measurement report (Sensing Measurement Report), a measurement report type (Measurement Report Type), and a to-be-determined (to be determined, TBD) element. The Sensing Transmitter is similar to the signal transmit end described in this specification, and is configured to send a sensing measurement frame during sensing measurement, for example, the sensing sounding frame, the NDP frame, or another sensing measurement frame described above. The Sensing Receiver is similar to the signal receive end described in this specification, and is configured to receive the sensing measurement frame during sensing measurement. The Sensing Measurement Report indicates a requested or returned sensing measurement report, and the Measurement Report Type indicates a type of the requested or returned sensing measurement report. The TBD element represents other information or fields that are potential, under discussion, or to be finally determined.

Optionally, in this application, there are two types of sensing measurement reports. One is the first CSI directly obtained based on the sensing measurement frame, and the other one is the second CSI obtained based on the weight vector. The two types may be separately indicated by using the Measurement Report Type subfield. For example, if the Measurement Report Type is a first value (for example, 1), it may indicate that the requested or returned sensing measurement report is the first CSI directly obtained based on the sensing measurement frame; or if the Measurement Report Type is a second value (for example, 0), it may indicate that the requested or returned sensing measurement report is the second CSI obtained based on the weight vector.

**Sensing measurement instance phase,** for example, the sensing measurement instance phase shown in FIG. 4 to FIG. 6: Optionally, the weight vector W, the distance information of the P first distances and/or the Q second distances, or the like that needs to be exchanged between the two sensing parties may also be exchanged in the sensing instance phase.

For example, in a TB sensing measurement procedure, the weight vector W, the distance information of the P first distances and/or the Q second distances, or the like that needs to be exchanged between the two sensing parties may be carried in one or more of the following frames: a sensing polling trigger frame, a CTS-to-Self frame, an NDPA frame, and an NDP frame. In a non-TB sensing measurement procedure, the weight vector W, the distance information of the P first distances and/or the Q second distances, or the like that needs to be exchanged between the two sensing parties may be carried in one or more of the following frames: an NDPA frame and an NDP frame. In this implementation, when the weight vector W, the distance information of the P first distances and/or the Q second distances, or other information that is exchanged is not stable during sensing measurement setup, for example, the exchanged information needs to be changed in each sensing measurement instance or some sensing measurement instances, the information that needs to be exchanged can be flexibly adjusted, and performance of sensing measurement can be improved.

Optionally, from a perspective of whether the Responder needs to feed back a sensing measurement report, a sensing instance solution in the sensing measurement procedure may be classified into two types: The sensing measurement report needs to be fed back and does not need to be fed back. For a requirement that the Initiator requires the Responder to feed back the sensing measurement report, the Responder needs to calculate the second CSI based on the weight vector and the first CSI, and then feeds back the second CSI to the Initiator based on a sensing measurement report sensed based on the weight vector. After obtaining the channel measurement, the Initiator may use the second CSI to perform a sensing-related application.

Optionally, in the type of which the sensing measurement report needs to be fed back, the Responder needs to calculate the second CSI based on the weight vector and the first CSI, and then feeds back the second CSI to the Initiator based on a sensing measurement report sensed based on the weight vector. After obtaining the channel measurement, the Initiator may perform a sensing-related application by using the second CSI. In the type of which the sensing measurement report does not need to be fed back, the Responder may calculate the second CSI based on the weight vector and the first CSI, and then perform a sensing-related application by directly using the second CSI. In other words, the Responder does not need to feed back the first CSI or the second CSI, and the Responder performs sensing by using the first CSI or the second CSI.

Optionally, the weight vector W-based sensing method shown in FIG. 9 further includes the following two phases to terminate the sensing measurement procedure.

**Sensing measurement setup termination (sensing measurement setup termination) phase:** This phase is used to: terminate sensing measurement previously set up between the two sensing parties and stop the use of parameters exchanged in a corresponding sensing measurement setup phase.

**Sensing session termination (sensing session termination) phase:** This phase is used to: terminate a sensing session previously set up between the two sensing parties and stop the use of parameters exchanged in a corresponding sensing session setup phase.

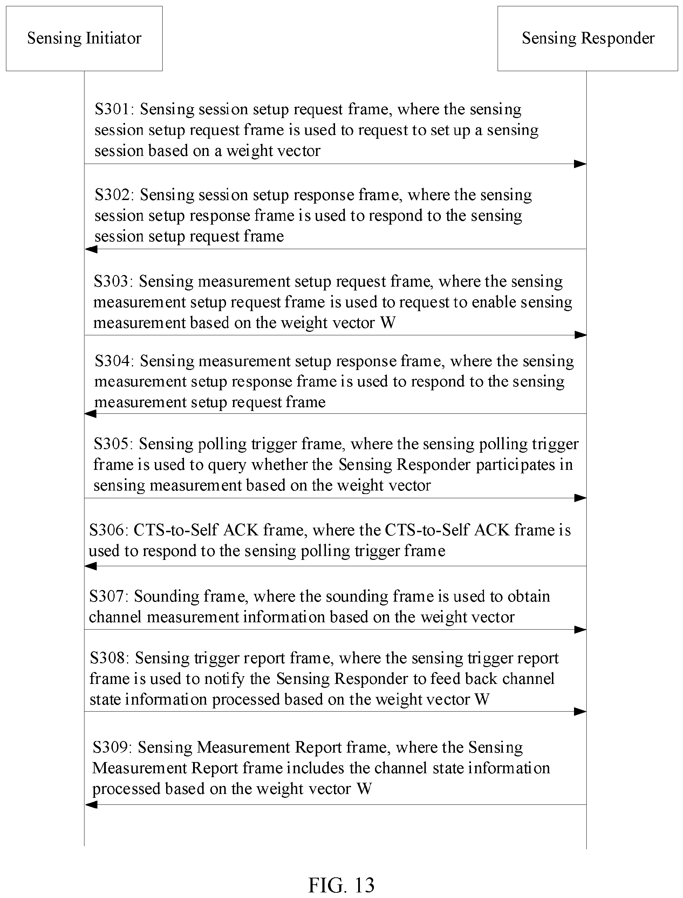

FIG. 13 is a schematic flowchart of a sensing measurement method according to an embodiment of this application. The sensing measurement method shown in FIG. 13 is a weight vector-based sensing measurement procedure provided based on the TB sensing measurement procedure shown in FIG. 4. The sensing measurement method is a sensing measurement method based on a TB mechanism, in which an AP serves as a Sensing Initiator, a STA serves as a Sensing Responder, and the AP requires the STA to feed back a sensing measurement instance of channel measurement information. A detailed procedure of the sensing measurement method may include but is not limited to the following steps.

S301: The Sensing Initiator sends a sensing session setup request frame to the Sensing Responder; and correspondingly, the Sensing Responder receives the sensing session setup request frame, where the sensing session setup request frame is used to request to set up a sensing session based on a weight vector.

Optionally, the sensing session setup request frame may carry the measurement type field described in step S201. For example, the sensing session setup request frame may carry a sensing measurement type (sensing measurement Type) field, indicating that the sensing session setup request frame is used to request to set up a sensing session based on a weight vector W, which is different from a sensing session whose channel measurement information is CSI. For example, the sensing measurement Type field may use a value 0 to indicate a CSI-based sensing session, and use a value 1 to indicate a sensing session based on a weight vector.

S302: The Sensing Responder sends a sensing session setup response frame to the Sensing Initiator; and correspondingly, the Sensing Initiator receives the sensing session setup response frame, where the sensing session setup response frame is used to respond to the sensing session setup request frame.

Optionally, the sensing session setup response frame may carry a same sensing measurement Type field, for example, is set to a value 1, so that both sensing parties agree to set up the sensing session based on the weight vector.

Based on the steps S301 and S302, the AP and the STA that participate in the sensing session may be successfully associated, and may perform the following operations in a sensing measurement setup phase subsequently, to exchange related information such as the weight vector.

S303: The Sensing Initiator sends a sensing measurement setup request frame to the Sensing Responder; and correspondingly, the Sensing Responder receives the sensing measurement setup request frame, where the sensing measurement setup request frame is used to request to enable sensing measurement based on the weight vector W.

In an optional implementation, the sensing measurement setup request frame may be the first frame in FIG. 8. As shown in FIG. 9, in a sensing measurement setup phase, when the weight vector W used by both sensing parties to perform sensing measurement, or the distance information of the P first distances and/or the Q second distances remains unchanged, the weight vector W, or the distance information of the P first distances and/or the Q second distances may be exchanged in this phase. In other words, in this implementation, the sensing measurement setup request frame may include the first field in FIG. 8. The first field indicates the weight vector W; or indicates the P first distances at which signal-to-noise ratios or energy needs to be enhanced, and/or the Q second distances at which signal-to-noise ratios or energy needs to be suppressed. As shown in FIG. 8, when the first field indicates the P first distances at which the signal-to-noise ratios or the energy needs to be enhanced, and/or the Q second distances at which the signal-to-noise ratios or energy needs to be suppressed, the Sensing Responder may further calculate the weight vector based on the distance information by using the foregoing method. Details are not described herein again.

Optionally, the first field may be a weight vector (weight vector) field, and may be located in the Sensing Measurement Parameters Element and/or the another field in FIG. 10, or may be located in the Sensing Measurement Parameters field and/or the another field in the Sensing Measurement Parameters Element in FIG. 11, or may be located in the TBD in FIG. 12.

Optionally, in addition to the first field in FIG. 8, the sensing measurement setup request frame may further include the second field in FIG. 8. For example, the second field is located before the first field in the sensing measurement setup request frame. When the second field is a first value, it indicates that the subsequent first field is a value or an index of the weight vector W. When the second field is a second value, it indicates that the subsequent first field is the distance information.

S304: The Sensing Responder sends a sensing measurement setup response frame to the Sensing Initiator; and correspondingly, the Sensing Initiator receives the sensing measurement setup response frame, where the sensing measurement setup response frame is used to respond to the sensing measurement setup request frame.

Optionally, the sensing measurement setup response frame may be used to acknowledge setup of sensing measurement based on the weight vector with the Sensing Initiator. Optionally, the sensing measurement setup response frame may include the third field. For example, if a state code field (Status code field) is 0, it may indicate that the Sensing Responder agrees to enable sensing measurement based on the weight vector. Optionally, the sensing measurement setup response frame may include the first field, or may further include the second field. The first field and the second field in the sensing measurement setup response frame may have same values as the first field and the second field in the sensing measurement setup request frame. For example, the sensing measurement setup response frame may copy the values of the first field and the second field in the sensing measurement setup request frame.

Based on the steps S301 to S304, the AP and the STA that participate in sensing measurement may be associated and set successfully, and may enter a sensing measurement instance phase subsequently, to obtain the channel measurement information. In this embodiment, for a TB-based mechanism, step S305 needs to be performed.

S305: The Sensing Initiator sends a sensing polling trigger frame to the Sensing Responder; and correspondingly, the Sensing Responder receives the sensing polling trigger frame, where the sensing polling trigger frame is used to query whether the Sensing Responder participates in sensing measurement based on the weight vector.

A user information field (User Information field) in the sensing polling trigger frame indicates a receive end, namely, the Sensing Responder such as the STA, that participates in sensing measurement based on the weight vector.

Optionally, in addition to the implementation in which the first field and the second field are placed in the sensing measurement setup request frame in steps S303 and S304, there is another optional implementation in which the first field and the second field are located in the sensing polling trigger frame. This implementation can support the Sensing Initiator such as the AP side in dynamically modifying information in the first field and the second field, and notifying the Sensing Responder such as the STA to update the corresponding information in a timely manner. In this way, in a sensing measurement instance, the STA may obtain latest channel measurement information based on a latest weight vector or latest distance information.

S306: The Sensing Responder sends a CTS-to-Self ACK frame to the Sensing Initiator; and correspondingly, the Sensing Initiator receives the CTS-to-Self ACK frame, where the CTS-to-Self ACK frame is used to acknowledge the sensing polling trigger frame.

Optionally, the CTS-to-Self ACK frame is used to notify the Sensing Initiator that the Sensing Responder participates in sensing measurement based on the weight vector.

S307: The Sensing Initiator sends a sounding frame to the Sensing Responder; and correspondingly, the Sensing Responder receives the sounding frame, where the sounding frame is used to obtain the channel measurement information based on the weight vector.

Optionally, in addition to the implementation in which the first field and the second field are placed in the sensing measurement setup request frame in step S303, or the implementation in which the first field and the second field are placed in the sensing polling trigger frame in step S305, there is still another optional implementation in which the first field and the second field are placed in the sounding frame. This implementation can also support the Sensing Initiator such as the AP side in dynamically modifying information in the first field and the second field, and notifying the Sensing Responder such as the STA to update the corresponding information in a timely manner. In this way, in a sensing measurement instance, the STA may obtain latest channel measurement information based on a latest weight vector or latest distance information.

S308: The Sensing Initiator sends a sensing trigger report frame to the Sensing Responder; and correspondingly, the Sensing Responder receives the sensing trigger report frame, where the sensing trigger report frame is used to notify the Sensing Responder to feed back the channel state information processed based on the weight vector W.

Optionally, a feedback type field in the sensing trigger report frame may be that described in S205, indicating that a feedback frame sent by the Sensing Responder needs to include the channel state information processed based on the weight vector W. Optionally, the sensing trigger report frame may further specify whether the Sensing Responder performs an immediate feedback (immediate feedback) mechanism or a delayed feedback (delayed feedback) mechanism.

S309: The Sensing Responder sends a Sensing Measurement Report frame to the Sensing Initiator; and correspondingly, the Sensing Initiator receives the Sensing Measurement Report frame, where the Sensing Measurement Report frame may be the feedback frame described in step S205 in FIG. 8, and includes the channel state information processed based on the weight vector W.

Optionally, a value of a sensing measurement type in the Sensing Measurement Report frame may indicate that the channel state information processed based on the weight vector W is placed in the Sensing Measurement Report field.

It can be seen that the sensing measurement method shown in FIG. 13 can obtain the channel state information processed based on the weight vector. This is different from channel state information directly obtained through channel estimation, greatly reduces a data amount of channel measurement information, reduces a requirement of a wireless bandwidth, and also helps improve performance of sensing based on the obtained channel measurement information.

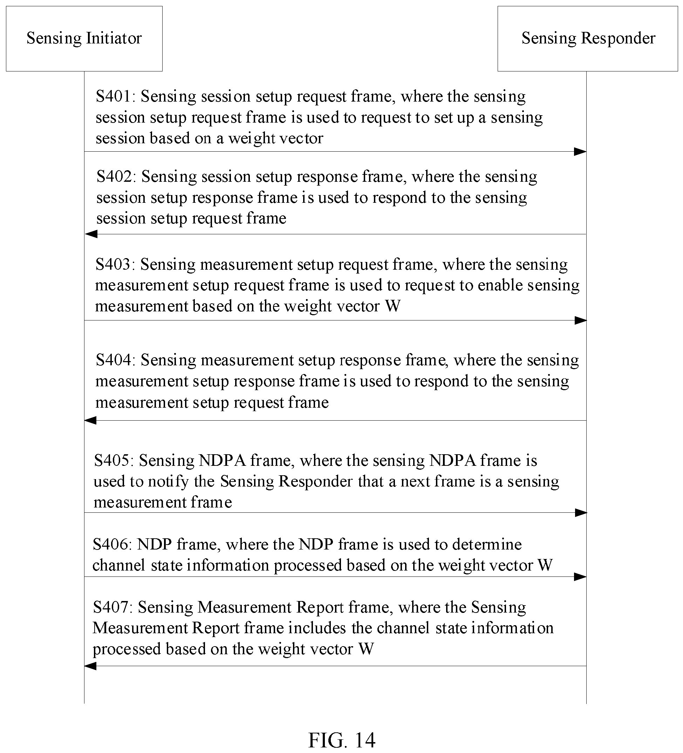

FIG. 14 is a schematic flowchart of another sensing measurement method according to an embodiment of this application. The sensing measurement method shown in FIG. 14 is a sensing measurement method based on the non-TB mechanism shown in FIG. 6, in which a STA serves as a Sensing Initiator, an AP serves as a Sensing Responder, and the STA requires the AP to feed back a sensing measurement instance of channel measurement information. A detailed procedure of the sensing measurement method may include but is not limited to the following steps.

S401: The Sensing Initiator sends a sensing session setup request frame to the Sensing Responder; and correspondingly, the Sensing Responder receives the sensing session setup request frame, where the sensing session setup request frame is used to request to set up a sensing session based on a weight vector.

S402: The Sensing Responder sends a sensing session setup response frame to the Sensing Initiator; and correspondingly, the Sensing Initiator receives the sensing session setup response frame, where the sensing session setup response frame is used to respond to the sensing session setup request frame.

S403: The Sensing Initiator sends a sensing measurement setup request frame to the Sensing Responder; and correspondingly, the Sensing Responder receives the sensing measurement setup request frame, where the sensing measurement setup request frame is used to request to enable sensing measurement based on the weight vector W.

S404: The Sensing Responder sends a sensing measurement setup response frame to the Sensing Initiator; and correspondingly, the Sensing Initiator receives the sensing measurement setup response frame, where the sensing measurement setup response frame is used to respond to the sensing measurement setup request frame.

Steps S401 to S404 are the same as steps S301 and S302 in FIG. 13, and a difference lies in that the STA serves as the Sensing Initiator and the AP serves as the Sensing Responder. Therefore, for related content of steps S401 to S404, refer to the content described in FIG. 13. Details are not described herein again.

S405: The Sensing Initiator sends a sensing NDPA frame to the Sensing Responder; and correspondingly, the Sensing Responder receives the sensing NDPA frame, where the sensing NDPA frame is used to notify the Sensing Responder that a next frame is a sensing measurement frame such as an NDP frame, and of a related parameter of the sensing measurement frame.

Optionally, in addition to the implementation in which the first field and the second field are placed in the sensing measurement setup request frame, there is another optional implementation in which the first field and the second field may be located in the sensing NDPA frame. This implementation can support the Sensing Initiator such as the STA side in dynamically modifying information in the first field and the second field, and notifying the Sensing Responder such as the AP to update the corresponding information in a timely manner. In this way, the AP may obtain latest channel measurement information based on a latest weight vector or latest distance information.

S406: The Sensing Initiator sends the NDP frame to the Sensing Responder; and correspondingly, the Sensing Responder receives the NDP frame, where the NDP frame is used to determine channel state information processed based on the weight vector.

Optionally, in addition to the implementation in which the first field and the second field are placed in the sensing measurement setup request frame, and the implementation in which the first field and the second field are placed in the sensing NDPA frame, there is still another optional implementation in which the first field and the second field may be located in the NDP frame. This implementation can support the Sensing Initiator such as the STA side in dynamically modifying information in the first field and the second field, and notifying the Sensing Responder such as the AP to update the corresponding information in a timely manner. In this way, the AP may obtain latest channel measurement information based on a latest weight vector or latest distance information.

S407: The Sensing Responder sends a Sensing Measurement Report frame to the Sensing Initiator; and correspondingly, the Sensing Initiator receives the Sensing Measurement Report frame, where the Sensing Measurement Report frame may be the feedback frame described in step S205 in FIG. 8, and includes the channel state information processed based on the weight vector W.

Optionally, a value of a sensing measurement type in the Sensing Measurement Report frame may indicate that the channel state information processed based on the weight vector W is placed in the Sensing Measurement Report field.

The sensing measurement method shown in FIG. 14 is for the non-TB mechanism, and does not need to use a trigger mechanism (for example, by sending the sensing polling trigger frame in FIG. 13) to transmit a packet. Instead, based on a random contention access mechanism, the sensing NDPA frame is used to notify the Sensing Responder that a next frame is a sensing measurement frame and of a related parameter of the sensing measurement frame. In this way, the AP may obtain, in a timely manner based on the sensing measurement frame, the channel state information processed based on the weight vector W, to feed back the channel state information processed based on the weight vector W to the STA. It can be seen that the sensing measurement method shown in FIG. 14 greatly reduces a data amount of the channel measurement information, reduces a requirement of a wireless bandwidth, and also helps improve performance of sensing based on the obtained channel measurement information.

In another embodiment, a difference from the sensing measurement method shown in FIG. 13 and the sensing measurement method shown in FIG. 14 lies in that, in this embodiment, after step S306 in FIG. 13, the sensing measurement method for TB may further include both an operation of the NDPA frame in step S405 and content of the NDP frame in S406 in FIG. 14. Correspondingly, the sensing measurement method for TB uses the NDP frame to replace the sounding frame in FIG. 13 as the sensing measurement frame. In other words, corresponding to the TB sensing measurement procedure that includes the NDPA frame and that is shown in FIG. 5, this application further provides an embodiment. The sensing measurement method provided in this embodiment includes a related operation except the sounding frame in the sensing measurement method shown in FIG. 13, and may further include sounding sub-phases of the NDPA frame and the NDP frame in the sensing measurement method shown in FIG. 14. It can be seen that the sensing measurement based on the weight vector W in this embodiment includes not only a polling sub-phase, but also includes the sounding sub-phases of the NDPA frame and the NDP frame. This improves performance of sensing performed by using sensing measurement information of the sensing measurement.

In descriptions of this application, unless otherwise specified, "a plurality of" means two or more than two. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the expression such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, a word such as "example" or "for example" is intended to present a related concept in a specific manner for ease of understanding.

In descriptions of this application, unless otherwise specified, "/" represents an "or" relationship between associated objects. For example, A/B may represent A or B. The term "and/or" in this application is merely an association relationship for describing the associated objects, and represents that three relationships may exist. For example, A and/or B may represent the following three cases: Only A exists, both A and B exist, and only B exists, where A and B may be singular or plural.

In this application, unless otherwise specified, for same or similar parts in embodiments, refer to each other. In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship of the technical features. The following embodiments of this application do not constitute a limitation on the protection scope of this application.

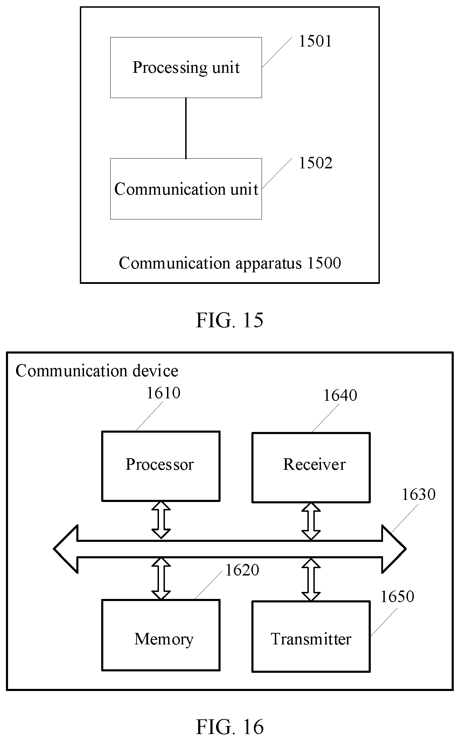

In embodiments of this application, the first apparatus and the second apparatus may be divided into functional modules based on the foregoing method examples. For example, the functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, there may be another division manner. The following describes in detail the communication apparatus in embodiments of this application with reference to FIG. 15 and FIG. 16. The communication apparatus may be the signal transmit end, the Initiator, the Sensing Initiator, or the Sensing Transmitter; or the communication apparatus may be the signal receive end, the Responder, the Sensing Responder, or the Sensing Receiver.

FIG. 15 is a diagram of a structure of a communication apparatus 1500 according to an embodiment of this application. As shown in FIG. 15, the communication apparatus 1500 includes a processing unit 1501 and a communication unit 1502.

Optionally, the communication apparatus 1500 may be configured to perform a related operation of the signal transmit end, the Initiator, the Sensing Initiator, or the Sensing Transmitter.

The processing unit 1501 is configured to obtain a weight vector W.

The communication unit 1502 is configured to send channel state information processed based on the weight vector W.

Signal-to-noise ratios or energy, at P first distances, of the channel state information processed based on the weight vector W is enhanced, and/or signal-to-noise ratios or energy, at Q second distances, of the channel state information processed based on the weight vector W is suppressed, where P and Q are positive integers.

In an optional implementation, before the processing unit 1501 obtains the weight vector W, the communication unit 1502: is further configured to receive a request frame, where the request frame is used to request to set up a channel measurement session based on the weight vector W; and is further configured to send a response frame, where the response frame is used to respond to the request frame.

In an optional implementation, the request frame includes a measurement type field. The measurement type field indicates that the request frame is used to request to set up the channel measurement session based on the weight vector W.

In an optional implementation, that the processing unit 1501 obtains a weight vector W may be understood as obtaining the weight vector W based on a first frame. Correspondingly, the communication unit 1502 is further configured to receive the first frame. The first frame includes a first field. The first field indicates the weight vector W; or indicates the P first distances at which the signal-to-noise ratios or the energy needs to be enhanced, and/or the Q second distances at which the signal-to-noise ratios or the energy needs to be suppressed. If the first field indicates the P first distances and/or the Q second distances, the processing unit 1501 is further configured to determine the weight vector W based on the P first distances and/or the Q second distances.

In an optional implementation, that the processing unit 1501 determines the weight vector W based on the P first distances and/or the Q second distances is specifically as follows: determining a steering matrix V based on the P first distances and/or the Q second distances, where the steering matrix V includes a steering row vector corresponding to each of L distances, the steering row vector corresponding to each distance is obtained based on a propagation delay corresponding to the distance, and the L distances include the P first distances and/or the Q second distances; and determining the weight vector W based on the steering matrix V.

In an optional implementation, the weight vector W and the steering matrix V satisfy the following relationship:

$$W \times V + S = U,$$

where

S represents noise on a path of the L distances, and is a row vector whose quantity of columns is L; and
U is a row vector including L elements corresponding to the L distances, all elements corresponding to the first distance are 1, and all elements corresponding to the second distance are 0.

In an optional implementation, the first frame further includes a second field. If the second field is a first value, the first field indicates the weight vector W. If the second field is a second value, the first field indicates the P first distances at which the signal-to-noise ratios or the energy needs to be enhanced, and/or the Q second distances at which the signal-to-noise ratios or the energy needs to be suppressed.

In an optional implementation, the first frame is a sensing session setup request frame in a sensing session setup phase, a sensing measurement setup request frame in a sensing measurement setup phase, or a sensing polling trigger frame, a polling frame, a null data packet announcement frame, a null data packet frame, or a sounding frame in a sensing measurement phase.

In an optional implementation, that the communication unit 1502 is configured to send channel state information processed based on the weight vector W is specifically as follows: sending a feedback frame. The feedback frame includes the channel state information processed based on the weight vector W, and a value of a feedback type field in the feedback frame indicates that the feedback frame includes the channel state information processed based on the weight vector W.

In an optional implementation, before the communication unit 1502 sends the channel state information processed based on the weight vector W, the communication unit 1502 is further configured to receive a trigger frame. A value of a feedback type field in the trigger frame is used to trigger sending of the channel state information processed based on the weight vector W.

Optionally, the communication apparatus 1500 may perform a related operation of the signal receive end, the Responder, the Sensing Responder, or the Sensing Receiver.

The communication unit 1502 is configured to receive channel state information processed based on a weight vector W.

Signal-to-noise ratios or energy, at P first distances, of the channel state information processed based on the weight vector W is enhanced, and/or signal-to-noise ratios or energy, at Q second distances, of the channel state information processed based on the weight vector W is suppressed, where P and Q are positive integers.

In an optional implementation, the communication unit 1502 is further configured to: send a request frame, where the request frame is used to request to set up a channel measurement session based on the weight vector W; and receive a response frame, where the response frame is used to respond to the request frame.

In an optional implementation, the request frame includes a measurement type field. The measurement type field indicates that the request frame is used to request to set up the channel measurement session based on the weight vector W.

In an optional implementation, the communication unit 1502 is further configured to send a first frame. The first frame includes a first field. The first field indicates the weight vector W. Alternatively, the first field indicates the P first distances at which the signal-to-noise ratios or the energy needs to be enhanced, and/or the Q second distances at which the signal-to-noise ratios or the energy needs to be suppressed, and the P first distances and/or the Q second distances are used to determine the weight vector W.

In an optional implementation, the first frame further includes a second field. If the second field is a first value, the first field indicates the weight vector W. If the second field is a second value, the first field indicates the P first distances at which the signal-to-noise ratios or the energy needs to be enhanced, and/or the Q second distances at which the signal-to-noise ratios or the energy needs to be suppressed.

In an optional implementation, the first frame is a sensing session setup request frame in a sensing session setup phase, a sensing measurement setup request frame in a sensing measurement setup phase, or a sensing polling trigger frame, a polling frame, a null data packet announcement frame, a null data packet frame, or a sounding frame in a sensing measurement phase.

In an optional implementation, that the communication unit 1502 receives channel state information is specifically as follows: receiving a feedback frame. The feedback frame includes the channel state information processed based on the weight vector W, and a value of a feedback type field in the feedback frame indicates that the feedback frame includes the channel state information processed based on the weight vector W.

In an optional implementation, before receiving the channel state information, the communication unit 1502 is further configured to send a trigger frame. A value of a feedback type field in the trigger frame is used to trigger sending of the channel state information processed based on the weight vector W.

In an optional implementation, that the P first distances and/or the Q second distances are used to determine the weight vector W is specifically as follows: The weight vector W is determined based on a steering matrix V, where the steering matrix V is determined based on the P first distances and/or the Q second distances, the steering matrix V includes a steering row vector corresponding to each of L distances, the steering row vector corresponding to each distance is obtained based on a propagation delay corresponding to the distance, and the L distances include the P first distances and/or the Q second distances.

In an optional implementation, the weight vector W and the steering matrix V satisfy the following relationship:

$$W \times V + S = U,$$

where

S represents noise on a path of the L distances, and is a row vector whose quantity of columns is L; and U is a row vector including L elements corresponding to the L distances, all elements corresponding to the first distance are 1, and all elements corresponding to the second distance are 0.

FIG. 16 is a diagram of a structure of a communication device according to an embodiment of this application. As shown in FIG. 16, the communication device may be a chip or a circuit, for example, a chip or a circuit that may be disposed in a network device. The communication device performs a related operation of the receive end in the foregoing methods. The device may include a processor 1610, and may further include a memory 1620. The memory 1620 is configured to store instructions, and the processor 1610 is configured to execute the instructions stored in the memory 1620, so that the device implements a related operation of the signal transmit end, the Initiator, the Sensing Initiator, or the Sensing Transmitter, or implements a related operation of the signal receive end, the Responder, the Sensing Responder, or the Sensing Receiver.

Further, the communication device may include a receiver 1640 and a transmitter 1650. Further, the communication device may include a bus system 1630.

The processor 1610, the memory 1620, the receiver 1640, and the transmitter 1650 are connected through the bus system 1630. The processor 1610 is configured to execute the instructions stored in the memory 1620, to control the receiver 1640 to receive a signal and control the transmitter 1650 to send a signal, to complete the steps performed by the network device in the foregoing methods. The receiver 1640 and the transmitter 1650 may be a same physical entity or different physical entities. When the receiver 1640 and the transmitter 1650 are a same physical entity, the receiver 1640 and the transmitter 1650 may be collectively referred to as a transceiver. The memory 1620 may be integrated into the processor 1610, or may be disposed separately from the processor 1610.

In an implementation, it may be considered that functions of the receiver 1640 and the transmitter 1650 are implemented by using a transceiver circuit or a dedicated transceiver chip. It may be considered that the processor 1610 is implemented by using a dedicated processing chip, a processing circuit, a processor, or a general-purpose chip.

In another implementation, it may be considered that a related operation of the receive end provided in embodiments of this application is implemented by using a general-purpose computer. To be specific, program code for implementing functions of the processor 1610, the receiver 1640, and the transmitter 1650 is stored in the memory. A general-purpose processor implements the functions of the processor 1610, the receiver 1640, and the transmitter 1650 by executing the code in the memory. For example, the processor 1610 may invoke the program code in the memory 1620, or may enable, based on the receiver 1640 and the transmitter 1650, a computer or a network device to perform related operations of the processing unit, the communication unit, and the like in the embodiment shown in FIG. 15, or may perform related operations or implementations performed by the receive end in the foregoing method embodiments.

For concepts, explanations, detailed descriptions, and other steps related to technical solutions provided in embodiments of this application and related to the device, refer to descriptions of the content in the foregoing methods or other embodiments. Details are not described herein again.

According to the method provided in embodiments of this application, an embodiment of this application further provides a communication system, including the signal transmit end, the Initiator, the Sensing Initiator, or the Sensing Transmitter, and one or more of the signal receive end, the Responder, the Sensing Responder, or the Sensing Receiver.

It should be understood that, in embodiments of this application, the processor may be a central processing unit (Central Processing Unit, "CPU" for short), or the processor may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor or the like.

The memory may include a read-only memory and a random access memory, and provide instructions and data to the processor. A part of the memory may further include a non-volatile random access memory.

The bus system may further include a power bus, a control bus, a status signal bus, and the like, in addition to a data bus. However, for clear description, various types of buses in the figure are marked as the bus system.

In addition, this application further provides a computer-readable storage medium. The computer-readable storage medium stores computer instructions. When the computer instructions are run on a computer, the computer is enabled to perform a corresponding operation and/or procedure performed by the transmit end in the precoding matrix indication method in embodiments of this application, or the computer is enabled to perform a corresponding operation and/or procedure performed by the receive end in the precoding matrix indication method in embodiments of this application.

This application further provides a computer program product. The computer program product includes computer program code. When the computer program code is run on a computer, the computer is enabled to perform a corresponding operation and/or procedure performed by the transmit end in the precoding matrix indication method in embodiments of this application, or the computer is enabled to perform a corresponding operation and/or procedure performed by the receive end in the precoding matrix indication method in embodiments of this application.

This application further provides a chip, including a processor. The processor is configured to invoke and run a computer program stored in a memory, to perform a corresponding operation and/or procedure performed by the transmit end in the precoding matrix indication method in embodiments of this application, or perform a corresponding operation and/or procedure performed by the receive end in the precoding matrix indication method in embodiments of this application. Optionally, the chip further includes a memory, the memory and the processor are connected to the memory through a circuit or a wire, and the processor is configured to read and execute the computer program in the memory. Optionally, the chip further includes a communication interface, and the processor is connected to the communication interface. The communication interface is configured to receive data and/or information to be processed, and the processor obtains the data and/or the information from the communication interface, and processes the data and/or the information. The communication interface may be an input/output interface.

In an implementation process, steps in the foregoing methods can be completed by using a hardware integrated logic circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of the present invention.

A person of ordinary skill in the art may be aware that various illustrative logical blocks (illustrative logical blocks) and steps (steps) described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of the present invention.

It may be clearly understood by a person skilled in the art that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to an actual requirement to achieve the objectives of solutions of embodiments.

In addition, functional units in embodiments of the present invention may be integrated into one processing unit, or each of the units may exist alone physically, or two or more units are integrated into one unit.

All or some of the foregoing embodiments may be implemented by using software, hardware, firmware, or any combination thereof. When software is used for implementation, all or some of the embodiments may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The available medium may be a magnetic medium (for example, a floppy disk, a hard disk, or a magnetic tape), an optical medium (for example, a DVD), a semiconductor medium (for example, a solid state drive (Solid State Drive) (SSD)), or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A channel measurement method, wherein the method comprises:

   obtaining a weight vector W; and
   sending channel state information processed based on the weight vector W, wherein
   signal-to-noise ratios or energy, at P first distances, of the channel state information processed based on the weight vector W is enhanced, and/or signal-to-noise ratios or energy, at Q second distances, of the channel state information processed based on the weight vector W is suppressed, wherein P and Q are positive integers.

2. The method according to claim 1, wherein before the obtaining a weight vector W, the method further comprises:

   receiving a request frame, wherein the request frame is used to request to set up a channel measurement session based on the weight vector W; and
   sending a response frame, wherein the response frame is used to respond to the request frame.

3. The method according to claim 2, wherein the request frame comprises a measurement type field; and
   the measurement type field indicates that the request frame is used to request to set up the channel measurement session based on the weight vector W.

4. The method according to any one of claims 1 to 3, wherein the obtaining a weight vector W comprises:

   receiving a first frame, wherein the first frame comprises a first field; and
   the first field indicates the weight vector W; or indicates the P first distances at which the signal-to-noise ratios or the energy needs to be enhanced, and/or the Q second distances at which the signal-to-noise ratios or the energy needs to be suppressed; and
   if the first field indicates the P first distances and/or the Q second distances, the method further comprises: determining the weight vector W based on the P first distances and/or the Q second distances.

5. The method according to claim 4, wherein the first frame further comprises a second field; and

   if the second field is a first value, the first field indicates the weight vector W; or

if the second field is a second value, the first field indicates the P first distances at which the signal-to-noise ratios or the energy needs to be enhanced, and/or the Q second distances at which the signal-to-noise ratios or the energy needs to be suppressed.

6. The method according to claim 4 or 5, wherein the first frame is a sensing session setup request frame in a sensing session setup phase, a sensing measurement setup request frame in a sensing measurement setup phase, or a sensing polling trigger frame, a polling frame, a null data packet announcement frame, a null data packet frame, or a sensing sounding frame in a sensing measurement instance phase.

7. The method according to any one of claims 1 to 6, wherein the sending channel state information processed based on the weight vector W comprises:
sending a feedback frame, wherein the feedback frame comprises the channel state information processed based on the weight vector W, and a value of a feedback type field in the feedback frame indicates that the feedback frame comprises the channel state information processed based on the weight vector W.

8. The method according to claim 7, wherein before the sending channel state information processed based on the weight vector W, the method further comprises:
receiving a trigger frame, wherein a value of a feedback type field in the trigger frame is used to trigger sending of the channel state information processed based on the weight vector W.

9. The method according to claim 4, wherein the determining the weight vector W based on the P first distances and/or the Q second distances comprises:

determining a steering matrix V based on the P first distances and/or the Q second distances, wherein the steering matrix V comprises a steering row vector corresponding to each of L distances, the steering row vector corresponding to each distance is obtained based on a propagation delay corresponding to the distance, and the L distances comprise the P first distances and/or the Q second distances; and
determining the weight vector W based on the steering matrix V.

10. The method according to claim 9, wherein the weight vector W and the steering matrix V satisfy the following relationship:

$$W \times V + S = U,$$

wherein

S represents noise on a path of the L distances, and is a row vector whose quantity of columns is L; and
U is a row vector comprising L elements corresponding to the L distances, all elements corresponding to the first distance are 1, and all elements corresponding to the second distance are 0.

11. A channel measurement method, wherein the method comprises:

receiving channel state information processed based on a weight vector W, wherein
signal-to-noise ratios or energy, at P first distances, of the channel state information processed based on the weight vector W is enhanced, and/or signal-to-noise ratios or energy, at Q second distances, of the channel state information processed based on the weight vector W is suppressed, wherein P and Q are positive integers.

12. The method according to claim 11, wherein the method further comprises:

sending a request frame, wherein the request frame is used to request to set up a channel measurement session based on the weight vector W; and
receiving a response frame, wherein the response frame is used to respond to the request frame.

13. The method according to claim 12, wherein the request frame comprises a measurement type field; and
the measurement type field indicates that the request frame is used to request to set up the channel measurement session based on the weight vector W.

14. The method according to any one of claims 11 to 13, wherein the method further comprises:

sending a first frame, wherein the first frame comprises a first field; and
the first field indicates the weight vector W; or
the first field indicates the P first distances at which the signal-to-noise ratios or the energy needs to be enhanced, and/or the Q second distances at which the signal-to-noise ratios or the energy needs to be suppressed, and the P first distances and/or the Q second distances are used to determine the weight vector W.

15. The method according to claim 14, wherein the first frame further comprises a second field; and

if the second field is a first value, the first field indicates the weight vector W; or
if the second field is a second value, the first field indicates the P first distances at which the signal-to-noise ratios or the energy needs to be enhanced, and/or the Q second distances at which the signal-to-noise ratios or the energy needs to be suppressed.

16. The method according to claim 14 or 15, wherein the first frame is a sensing session setup request frame in a sensing session setup phase, a sensing measurement setup request frame in a sensing measurement setup phase, or a sensing polling trigger frame, a polling frame, a null data packet announcement frame, a null data packet frame, or a sounding frame in a sensing measurement phase.

17. The method according to any one of claims 11 to 16, wherein the receiving channel state information comprises: receiving a feedback frame, wherein the feedback frame comprises the channel state information processed based on the weight vector W, and a value of a feedback type field in the feedback frame indicates that the feedback frame comprises the channel state information processed based on the weight vector W.

18. The method according to claim 17, wherein before the receiving channel state information, the method further comprises:
sending a trigger frame, wherein a value of a feedback type field in the trigger frame is used to trigger sending of the channel state information processed based on the weight vector W.

19. The method according to claim 14, wherein that the P first distances and/or the Q second distances are used to determine the weight vector W is specifically as follows: the weight vector W is determined based on a steering matrix V, wherein the steering matrix V is determined based on the P first distances and/or the Q second distances, the steering matrix V comprises a steering row vector corresponding to each of L distances, the steering row vector corresponding to each distance is obtained based on a propagation delay corresponding to the distance, and the L distances comprise the P first distances and/or the Q second distances.

20. The method according to claim 19, wherein the weight vector W and the steering matrix V satisfy the following relationship:

$$W \times V + S = U,$$

wherein

S represents noise on a path of the L distances, and is a row vector whose quantity of columns is L; and
U is a row vector comprising L elements corresponding to the L distances, all elements corresponding to the first distance are 1, and all elements corresponding to the second distance are 0.

21. A communication apparatus, comprising one or more functional units, wherein the one or more functional units are configured to perform the method according to any one of claims 1 to 10, or are configured to perform the method according to any one of claims 11 to 20.

22. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 10 or the method according to any one of claims 11 to 20 by using a logic circuit or by executing code instructions.

23. A computer program product comprising instructions, wherein when the instructions are run on a computer, the computer is enabled to perform the method according to any one of claims 1 to 10, or perform the method according to any one of claims 11 to 20.

24. A communication apparatus, comprising a processor, wherein the processor invokes a computer program stored in a memory, so that the communication apparatus implements the method according to any one of claims 1 to 10, or implements the method according to any one of claims 11 to 20.

25. A computer-readable storage medium, wherein the computer-readable storage medium stores a computer program, and when the computer program is run, the method according to any one of claims 1 to 10 or the method according to any one of claims 11 to 20 is implemented.

26. A chip, comprising a processor, wherein the processor invokes a computer program stored in a memory, so that a communication apparatus comprising the chip implements the method according to any one of claims 1 to 10, or implements the method according to any one of claims 11 to 20.

Detection
target 103

Signal transmit
end 101

Direct signal

Reflected
signal

Signal receive end
102

FIG. 1

Responding node
203

Initiating node
201

Responding node
204

Responding node
202

FIG. 2

FIG. 3

Initiator
(signal
transmit end)

| (1) Sensing session setup request frame | (3) Sensing measurement setup request frame | (5) Sensing polling trigger frame | (7) Sensing sounding frame | (8) Sensing trigger report frame |

Responder
(signal receive
end)

| (2) Sensing session setup response frame | (4) Sensing measurement setup response frame | (6) CTS-to-self frame | | (9) Sensing measurement report frame |

Polling          Sounding          Reporting

Sensing session          Sensing measurement          TB sensing measurement instance
setup phase              setup phase

FIG. 4

FIG. 5

| Initiator (signal transmit end) | (1) Sensing session setup request frame | | (3) Sensing measurement setup request frame | | (5) Sensing polling trigger frame | (7) Null data packet announcement frame | (9) Sensing trigger report frame |
|---|---|---|---|---|---|---|---|
| Responder (signal receive end) | | (2) Sensing session setup response frame | | (4) Sensing measurement setup response frame | (6) CTS-to-self frame | (8) Null data packet frame | (10) Sensing measurement report frame |

Polling  Sounding  Reporting

Sensing session setup phase  Sensing measurement setup phase  Non-TB sensing measurement instance

FIG. 6

| Signal receive end | | Signal transmit end |

S101: Obtain a weight vector W

S102: The signal receive end processes first CSI based on the weight vector W to obtain second CSI

S103: Second CSI, where signal-to-noise ratios or energy of the second CSI at P first distances is enhanced, and/or signal-to-noise ratios or energy of the second CSI at Q second distances is suppressed

FIG. 7

| Signal transmit end | | Signal receive end |

S201: Request frame, used to request to set up a channel measurement session based on a weight vector W

S202: Response frame, used to respond to the request frame

S203: First frame, where the first frame includes a first field, and the first field indicates the weight vector W; or the first field indicates P first distances at which signal-to-noise ratios or energy needs to be enhanced, and/or Q second distances at which signal-to-noise ratios or energy needs to be suppressed

S204: The signal receive end determines, based on the first frame, the weight vector W used for channel measurement, and determines channel state information based on the weight vector W

S205: Channel state information processed based on the weight vector W

FIG. 8

FIG. 9

| Category (Category) | Public action (Public Action) | Dialog token (Dialog Token) | Measurement setup identifier (Measurement Setup ID) | DMG sensing measurement setup field (DMG Sensing Measurement Setup Element) | Sensing measurement parameter field (Sensing Measurement Parameters Element) |
|---|---|---|---|---|---|
| | | | | | |

FIG. 10

| Element identifier (Element ID) | Length (Length) | Element identifier extension (Element ID Extension) | Sensing measurement parameter (Sensing Measurement Parameters) | TBD |
|---|---|---|---|---|
| | | | | |

FIG. 11

| Sensing transmit end (Sensing Transmitter) | Sensing receive end (Sensing Receiver) | Sensing measurement report (Sensing Measurement Report) | Measurement report type (Measurement Report Type) | To be determined (TBD) |
|---|---|---|---|---|
| | | | | |

FIG. 12

| Sensing Initiator | | Sensing Responder |
|---|---|---|

S301: Sensing session setup request frame, where the sensing session setup request frame is used to request to set up a sensing session based on a weight vector

S302: Sensing session setup response frame, where the sensing session setup response frame is used to respond to the sensing session setup request frame

S303: Sensing measurement setup request frame, where the sensing measurement setup request frame is used to request to enable sensing measurement based on the weight vector W

S304: Sensing measurement setup response frame, where the sensing measurement setup response frame is used to respond to the sensing measurement setup request frame

S305: Sensing polling trigger frame, where the sensing polling trigger frame is used to query whether the Sensing Responder participates in sensing measurement based on the weight vector

S306: CTS-to-Self ACK frame, where the CTS-to-Self ACK frame is used to respond to the sensing polling trigger frame

S307: Sounding frame, where the sounding frame is used to obtain channel measurement information based on the weight vector

S308: Sensing trigger report frame, where the sensing trigger report frame is used to notify the Sensing Responder to feed back channel state information processed based on the weight vector W

S309: Sensing Measurement Report frame, where the Sensing Measurement Report frame includes the channel state information processed based on the weight vector W

FIG. 13

| Sensing Initiator | | Sensing Responder |

S401: Sensing session setup request frame, where the sensing session setup request frame is used to request to set up a sensing session based on a weight vector

S402: Sensing session setup response frame, where the sensing session setup response frame is used to respond to the sensing session setup request frame

S403: Sensing measurement setup request frame, where the sensing measurement setup request frame is used to request to enable sensing measurement based on the weight vector W

S404: Sensing measurement setup response frame, where the sensing measurement setup response frame is used to respond to the sensing measurement setup request frame

S405: Sensing NDPA frame, where the sensing NDPA frame is used to notify the Sensing Responder that a next frame is a sensing measurement frame

S406: NDP frame, where the NDP frame is used to determine channel state information processed based on the weight vector W

S407: Sensing Measurement Report frame, where the Sensing Measurement Report frame includes the channel state information processed based on the weight vector W

FIG. 14

1501

Processing unit

1502

Communication unit

Communication apparatus 1500

FIG. 15

Communication device

1610

1640

Processor

Receiver

1630

1620

1650

Memory

Transmitter

FIG. 16

## INTERNATIONAL SEARCH REPORT

| International application No. |
|---|
| **PCT/CN2023/104252** |

**A. CLASSIFICATION OF SUBJECT MATTER**

H04W 24/08(2009.01)i

According to International Patent Classification (IPC) or to both national classification and IPC

**B. FIELDS SEARCHED**

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, DWPI, ENTXT, 3GPP, IEEE: 增强, 抑制, 增大, 减小, 减弱, 信噪比, 能量, 权重, 向量, 感知, 距离, 转向, 矩阵, 信道测量, 信道状态信息, enhancement, suppression, increase, decrease, signal-to-noise ratio, energy, weight, vector, perception, sensing, sense, distance, steering, matrix, channel measurement, Channel State Information, CSI

**C. DOCUMENTS CONSIDERED TO BE RELEVANT**

| Category* | Citation of document, with indication, where appropriate, of the relevant passages | Relevant to claim No. |
|---|---|---|
| A | CN 112075034 A (SAMSUNG ELECTRONICS CO., LTD.) 11 December 2020 (2020-12-11) description, paragraphs [0008]-[0127], and figures 1-6 | 1-26 |
| A | CN 110034803 A (HUAWEI TECHNOLOGIES CO., LTD.) 19 July 2019 (2019-07-19) entire document | 1-26 |
| A | CN 114760640 A (HUAWEI TECHNOLOGIES CO., LTD.) 15 July 2022 (2022-07-15) entire document | 1-26 |
| A | US 2022036123 A1 (INTEL CORPORATION) 03 February 2022 (2022-02-03) entire document | 1-26 |
| A | US 2022159736 A1 (HUAWEI TECHNOLOGIES CO., LTD.) 19 May 2022 (2022-05-19) entire document | 1-26 |
| A | WO 2022124869 A1 (LG ELECTRONICS INC.) 16 June 2022 (2022-06-16) entire document | 1-26 |
| A | WO 2022148461 A1 (HUAWEI TECHNOLOGIES CO., LTD.) 14 July 2022 (2022-07-14) entire document | 1-26 |

✓ Further documents are listed in the continuation of Box C.  ✓ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 July 2023** | **04 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2023/104252**

**C.     DOCUMENTS CONSIDERED TO BE RELEVANT**

| Category* | Citation of document, with indication, where appropriate, of the relevant passages | Relevant to claim No. |
|---|---|---|
| A | Lorenzo Cazzella et al. "Position-agnostic Algebraic Estimation of 6G V2X MIMO Channels via Unsupervised Learning" *IEEE*, 16 May 2022 (2022-05-16), entire document | 1-26 |

Form PCT/ISA/210 (second sheet) (July 2022)

**INTERNATIONAL SEARCH REPORT**
Information on patent family members

International application No.

**PCT/CN2023/104252**

| Patent document cited in search report | | | Publication date (day/month/year) | Patent family member(s) | | | Publication date (day/month/year) |
|---|---|---|---|---|---|---|---|
| CN | 112075034 | A | 11 December 2020 | US | 2019341978 | A1 | 07 November 2019 |
| | | | | EP | 3750253 | A1 | 16 December 2020 |
| | | | | WO | 2019212301 | A1 | 07 November 2019 |
| CN | 110034803 | A | 19 July 2019 | BR | 112020014143 | A2 | 08 December 2020 |
| | | | | US | 2020343960 | A1 | 29 October 2020 |
| | | | | WO | 2019137431 | A1 | 18 July 2019 |
| CN | 114760640 | A | 15 July 2022 | WO | 2022148461 | A1 | 14 July 2022 |
| US | 2022036123 | A1 | 03 February 2022 | DE | 102022125334 | A1 | 20 April 2023 |
| | | | | CN | 11601151 | A | 25 April 2023 |
| US | 2022159736 | A1 | 19 May 2022 | WO | 2021022952 | A1 | 11 February 2021 |
| | | | | EP | 3993301 | A1 | 04 May 2022 |
| WO | 2022124869 | A1 | 16 June 2022 | None | | | |
| WO | 2022148461 | A1 | 14 July 2022 | CN | 114760640 | A | 15 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211131509